# EUROPEAN PATENT SPECIFICATION

(11) **EP 3 207 489 B1**
(45) Date of publication and mention of the grant of the patent: **22.05.2019**
(21) Application number: 15782173.7
(22) Date of filing: 02.10.2015
(51) Int. Cl.: G06F 21/62, H04L 29/06, H04W 12/02

(54) **SYSTEMS AND METHODS FOR PROTECTING USER PRIVACY IN NETWORKED DATA COLLECTION**
SYSTEME UND VERFAHREN ZUM SCHUTZ DER PRIVATSPHÄRE IN EINER VERNETZTEN DATENSAMMLUNG
SYSTÈMES ET PROCÉDÉS POUR PROTÉGER LA CONFIDENTIALITÉ D'UN UTILISATEUR DANS UNE COLLECTION DE DONNÉES EN RÉSEAU

(30) Priority: 10.10.2014 US 201462062171 P; 13.10.2014 US 201462063229 P
(43) Date of publication of application: 23.08.2017
(73) Proprietor: PCMS Holdings, Inc., Wilmington, DE 19809 (US)
(72) Inventor: OLLIKAINEN, Ville J., FI-03400 Vihti (FI); KYLÄNPÄÄ, Markku, FI-00950 Helsinki (FI); VAINIKAINEN, Sari Eliisa, FI-03250 Ojakkala (FI); BÄCK, Asta I, FI-02750 Espoo (FI)
(74) Representative: AWA Sweden AB
(86) International application number: PCT/US2015/053869
(87) International publication number: WO 2016/057347

(56) References cited:
- US-A1- 2006 123 461
- US-A1- 2006 123 462
- SAMARATI ET AL: "Protecting Privacy when Dislosing Information: k-Anonymity and its Enforcement through Generalization and Suppression", SRI INTERNATIONAL TECHNICAL REPORT, XX, XX, 1 January 1998 (1998-01-01), pages 1-19, XP002243805,

## Description

### CROSS-REFERENCE TO RELATED APPLICATIONS

This application claims priority to and the benefit of (i)U.S. Provisional Patent Application Serial No. 62/062,171, filed October 10, 2014 and entitled "Systems and Methods of Peer-Oriented Privacy Protection" and (ii) U.S. Provisional Patent Application Serial No. 62/063,229, filed October 13, 2014 and entitled "System and Method of Peer Data Comparison".

### TECHNICAL FIELD

This disclosure relates to protection of user privacy and user anonymity in various online-communication contexts including but not limited to consumer-data collection and social networking.

### BACKGROUND

With the continuing rise in popularity of the Internet and the continuing prevalence of Internet-connected devices, whether mobile or otherwise, the world is becoming more and more interconnected every day. One collateral effect of this ever-increasing level of interconnectedness is the ever-increasing amount of data (including personal data) that is being generated, stored, and analyzed. The vast amounts of personal data that are available in many different ways online enable companies to make marketing efforts towards consumers in more and more targeted ways, such as by selecting particular advertisements to display to particular users. Another impact of this ever-increasing level of interconnectedness and the vast amounts of personal data that can be accessed in different ways is that social-networking sites and other services are becoming more and more sophisticated. Whether a user's data is being provided to a marketer, a social-networking service, or for some other type of entity and/or service, many users remain concerned about protecting their own privacy and anonymity to the extent they can while still participating in and using exciting new services and features.

Among the mechanisms for protecting users' privacy and anonymity are devices (and/or functional parts of other devices) known generally and referred to herein as trusted execution environments (TEEs). In a typical arrangement, a number of different users and/or groups of users operate respective TEEs that can communicate with one another via a trusted communication network, and that each have secure access to personal data associated with its corresponding one or more users. Users can communicate with one another and with other entities and/or services anonymously via their respective TEEs, since a user's own TEE can mask (even to their own user) the identity of other users with which their user is communicating, only disclosing to their own user information approved for disclosure by the other users via their respective TEEs. And TEEs can perform other functions as well.

Moreover, data-oriented companies form an increasingly large component of the economy. Some data-oriented companies operate as data brokers, collecting consumers' personal information and reselling or sharing that information with others. For decades, policymakers have expressed concern about the lack of transparency in companies that buy and sell consumer data without interacting directly with consumers.

Currently there are a number of companies that collect and own user data, such as Google, Yahoo, Facebook, Apple, and Amazon. These companies provide decently-priced or even free services to users, and users generally give them permission to analyze and utilize the personal data as they wish. As a consequence, for instance, selected Google Ads-selected by mining such personal data-follow the user from one internet site to another. Another example is Amazon, which provides user recommendations for different items. The larger the company is and the more data it has collected, the more efficient and effective it can be in targeting the messages. Smaller players are inherently in an inferior position.

Some marketing services utilize public databases or databases owned by charity organizations, for instance, to target mail advertisements to owners of GM vehicles, or to offer to sell baby clothing to families with small children, as examples. In these cases, there are typically a limited number of trusted partners who are allowed to even request database searches from the public register owners, while typically any individual can opt-out of the use of their address and/or other personal data for marketing purposes. Patent specification US2006123462 discloses systems and methods for protecting non-public information in a mobile environment.

Patent specification US2006123461 discloses systems and methods anonymising knowledge or data extracted using a knowledge extraction and/or data mining transformation, to protect the privacy of individuals.

The invention is defined by the independent claims. Preferred embodiments are set out in the dependent claims.

### OVERVIEW OF SELECT DISCLOSED EMBODIMENTS

Disclosed herein are systems and methods for protecting user privacy in networked data collection.

One embodiment takes the form of a method that includes obtaining a user-data request that is associated with a requesting party. The method also includes preparing a first candidate response to the user-data request, where the first candidate response is based at least in part on data that is associated with a first user. The method also includes receiving a plurality of additional candidate responses that are respectively based on data that is respectively associated with a plurality of additional users. The method also includes determining a privacy level of the first candidate response based at least in part on the received plurality of additional candidate responses. The method also includes determining that the privacy level exceeds a privacy threshold, and responsively sending, to the requesting party, a user-data response associated with the user-data request.

Another embodiment takes the form of a computing system that includes a communication interface, a processor, and data storage containing instructions executable by the processor for causing the computing system to carry out a set of functions, where the set of functions includes the steps that are recited in the preceding paragraph.

Moreover, any of the variations and permutations described in the ensuing paragraphs and anywhere else in this disclosure can be implemented with respect to any embodiments, including with respect to any method embodiments and with respect to any system embodiments. Furthermore, this flexibility and cross-applicability of embodiments is present in spite of the use of slightly different language (e.g., process, method, steps, functions, set of functions, and the like) to describe and/or characterize such embodiments.

In at least one embodiment, obtaining the user-data request includes receiving the user-data request from the requesting party.

In at least one embodiment, the requesting party had posted the user-data request to a network location, and obtaining the user-data request includes retrieving the posted user-data request from the network location.

In at least one embodiment, the user-data request includes computer-executable instructions.

In at least one embodiment, the method is performed in a TEE. In at least one such embodiment, the TEE is associated with a single user and is not associated with any of the additional users in the plurality of additional users; in at least one such embodiment, the single user is the first user.

In at least one embodiment, the method is performed in a data-broker device.

In at least one embodiment the method is performed in a data-aggregation device.

In at least one embodiment, the user-data response is based at least in part on the first candidate response. In at least one such embodiment, the user-data response is also based at least in part on the received plurality of additional candidate responses.

In at least one embodiment, the user-data response is based at least in part on a statistical combination of the first candidate response and the received plurality of additional candidate responses.

In at least one embodiment, the user-data response consists of the first candidate response.

In at least one embodiment, determining the privacy level of the first candidate response based at least in part on the received plurality of additional candidate responses includes determining the privacy level of the first candidate response based at least in part on a total number of additional candidate responses in the plurality of additional candidate responses.

In at least one embodiment, the method also includes determining a similar number of additional candidate responses in the plurality of additional candidate responses that are similar to the first candidate response, and determining the privacy level of the first candidate response based at least in part on the received plurality of additional candidate responses includes determining the privacy level of the first candidate response based at least in part on the similar number of additional candidate responses. In at least one such embodiment, determining the privacy level of the first candidate response based at least in part on the similar number of additional candidate responses includes determining the privacy level of the first candidate response based at least in part on a percentage relationship of the similar number of additional candidate responses to a total number of additional candidate responses.

In at least one embodiment, the method also includes (i) requesting the additional candidate responses based on the user-data request and (ii) receiving the additional candidate responses in the plurality of additional candidate responses from respective TEEs. In at least one such embodiment, requesting the additional candidate responses includes sending respective additional-candidate-response requests to the respective TEEs; in at least one such embodiment, each additional-candidate-response request includes the user-data request.

### BRIEF DESCRIPTION OF THE DRAWINGS

FIG. 1 depicts a first example distributed data-mining infrastructure, in accordance with at least one embodiment.
FIG. 2 depicts a second example distributed data-mining infrastructure, in accordance with at least one embodiment.
FIG. 3 depicts a third example distributed data-mining infrastructure, in accordance with at least one embodiment.
FIG. 4 depicts a fourth example distributed data-mining infrastructure, in accordance with at least one embodiment.
FIG. 5 depicts a fifth example distributed data-mining infrastructure, in accordance with at least one embodiment.
FIG. 6 depicts a sixth example distributed data-mining infrastructure, in accordance with at least one embodiment.
FIG. 7 depicts a first example method, in accordance with at least one embodiment.
FIG. 8 depicts a second example method, in accordance with at least one embodiment.
FIG. 9 depicts a first example wireless transmit/receive unit (WTRU), in accordance with at least one embodiment.
FIG. 10 depicts a second example WTRU, in accordance with at least one embodiment.
FIG. 11 depicts a first example networked server, in accordance with at least one embodiment.
FIG. 12 depicts a second example networked server, in accordance with at least one embodiment.

Moreover, it is noted that the entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-can only properly be read as being constructively preceded by a clause such as "In at least one embodiment,...." And it is for reasons akin to brevity and clarity of presentation that this implied leading clause is not repeated *ad nauseum* in the below detailed description of the drawings.

### DETAILED DESCRIPTION OF THE DRAWINGS

### 1. Introduction

The present disclosure relates at least in part to a number of different infrastructures over which trusted-communication interactions can take place, at least in part to a number of different methods that can be carried out over those various different infrastructures, and at least in part to various different architectures of hardware devices that could carry out those various methods over those various infrastructures.

Embodiments of the present disclosure may be employed in a distributed data-mining system, in which data-mining functions are performed in distributed secure computing environments referred to as a set of "sandboxes" (e.g., TEEs) that are trusted by the owners of user data. The distributed data-mining concept may be extended such that each sandbox operates only on the data of a single individual, leading to a high number of sandboxes in a system. The sandboxes can, however share some data confidentially with each other, in which case even the owner of a sandbox is advantageously not able to access the data processed by the sandbox. In such a system, a marketer or other party interested in data analysis may send inquiries, perhaps in the form of computer-executable code, for data analysis to each of the sandboxes. The sandboxes may respond to the interested parties without providing any personally identifying data.

The ability of a sandbox to respond without personally identifying data provides some measure of privacy protection. However, if the number of responding sandboxes is low, information from the sandbox may be excessively invasive of a user's privacy, as it may be possible based on outside information to infer the identity of the user associated with the responding sandbox. Embodiments of the present disclosure are particularly useful at protecting user privacy in situations in which the number of responding users is low. Moreover, embodiments of the present disclosure have applicability to protecting user privacy and anonymity in contexts such as third-party (e.g., marketer) requests for user data, connecting similarly situated users by way of secure social-networking services, and others.

In general, TEEs enable processes that are protected from the owner of the equipment. The implementations typically involve hardware-based security measures such as memory curtaining, which isolates sensitive areas of memory from other processes and even from the operating system. There can also be implementations of TEEs in which only a critical part of software, such as cryptographic operations are executed as a protected process, while secret data, such as encryption keys are under protection, too.

Some embodiments of the present disclosure operate to protect user privacy in circumstances in which there are potentially few sandboxes responding to a request. A sandbox receives a request and prepares a response to the request but does not initially send the response. Instead, the sandbox consults with a network of peers to determine whether other sandboxes are prepared to give similar responses. If the response is too unique, then privacy might become compromised and the sandbox may make a determination not to provide the response.

### 2. Example Infrastructures for Implementation

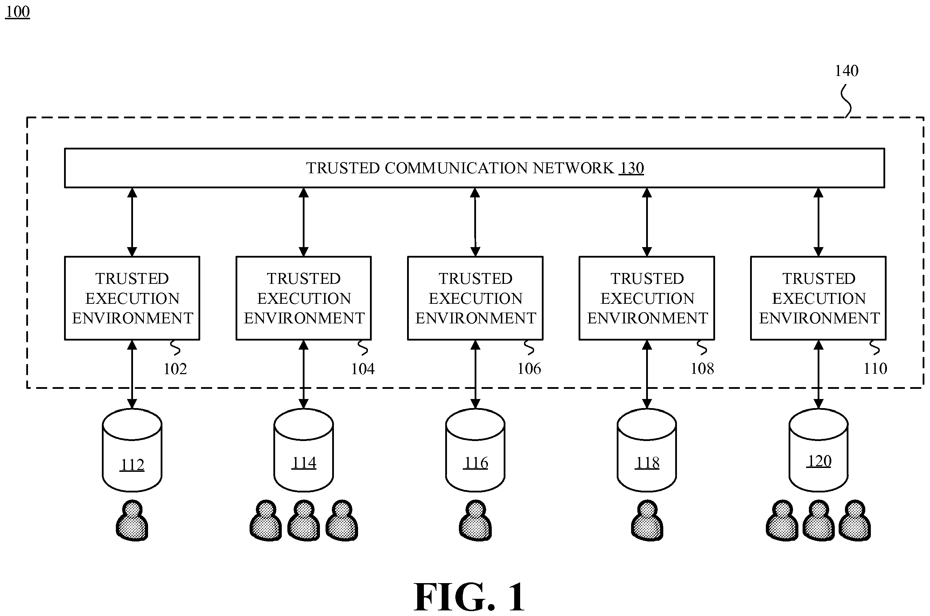

FIG. 1 depicts a first example distributed data-mining infrastructure, in accordance with at least one embodiment. In particular, FIG. 1 depicts an infrastructure 100 that includes a TEE 102 that has access to a user-data store 112, a TEE 104 that has access to a user-data store 114, a TEE 106 that has access to a user-data store 116, a TEE 108 that has access to a user-data store 118, and a TEE 110 that has access to a user-data store 120. Five TEEs are presented by way of example in FIG. 1, though any number could be used. Some TEEs (such as the TEEs 112, 116, and 118) are associated with a single user (i.e., store data that is associated with a single user), while some TEEs (such as the TEEs 114 and 120) are associated with multiple users (i.e., store data that is associated with multiple users). As depicted in FIG. 1, the TEEs 102-110 can communicate with one another via a trusted communication network 130. Furthermore, the TEEs 102-110 and the trusted communication network 130 operate within a trusted space 140.

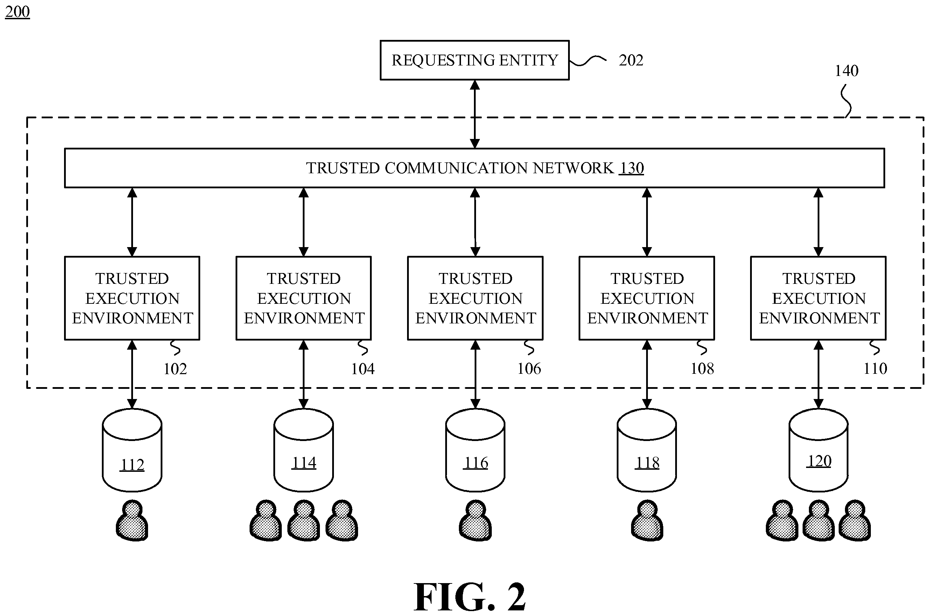

FIG. 2 depicts a second example distributed data-mining infrastructure, in accordance with at least one embodiment. In particular, FIG. 2 depicts an infrastructure 200 that includes all of the elements of FIG. 1 and further shows that a requesting entity 202 could also be in communication with the trusted communication network 130. As one example, the requesting entity could be a networked server, and could be operated by a third-party marketing company. And certainly many other examples could be listed here as well.

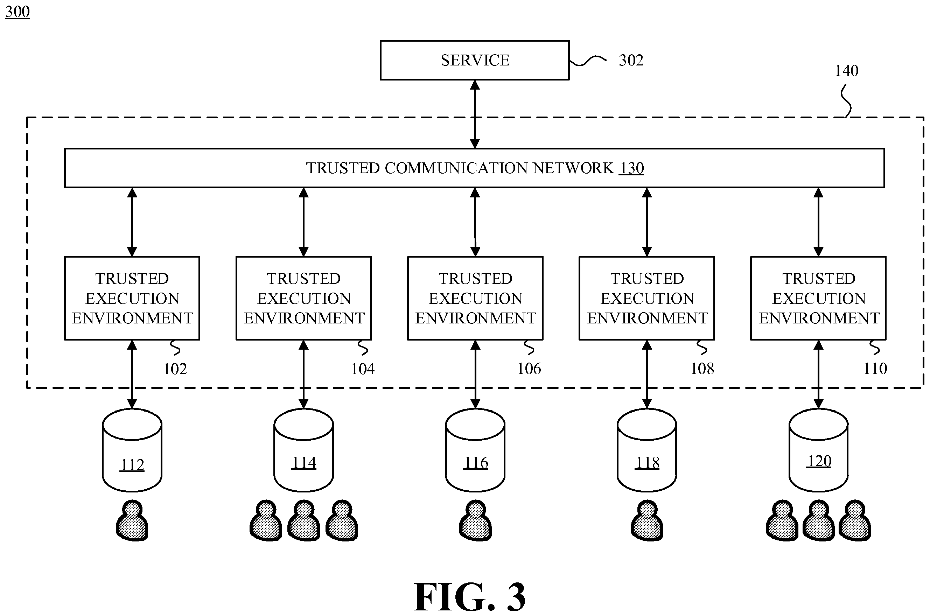

FIG. 3 depicts a third example distributed data-mining infrastructure, in accordance with at least one embodiment. In particular, FIG. 3 depicts an infrastructure 300 that includes all of the elements of FIG. 2 with the exception that the requesting entity 202 has been replaced by a service 302. In various different embodiments, the service 302 could be a marketing service, a social-networking service, and/or any other service deemed suitable by those of skill in the relevant art for a given context. The service 302 could be implemented using a networked server or a combination of multiple cooperating networked servers, as examples.

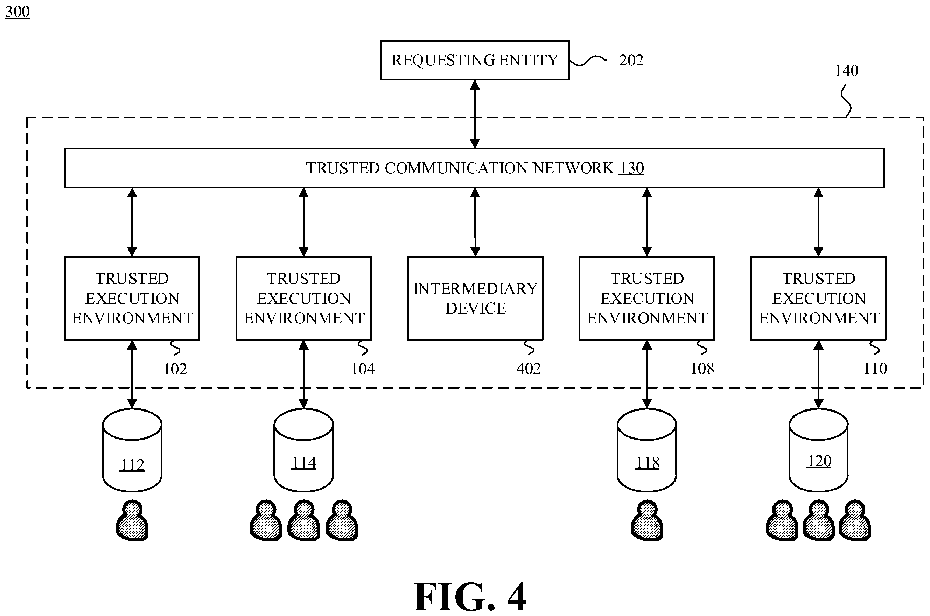

FIG. 4 depicts a fourth example distributed data-mining infrastructure, in accordance with at least one embodiment. In particular, FIG. 4 depicts an infrastructure 400 that includes all of the elements of FIG. 2 with the exception that an intermediary device 402 is present instead of the TEE 106, and accordingly the user-data store 116 (and its accompanying user) are also not present. The intermediary device 402 could take the form of or at least include a data-broker device, (e.g., a secure data-broker device), a data-aggregation device, a non-user-specific TEE, a networked server, and/or the like.

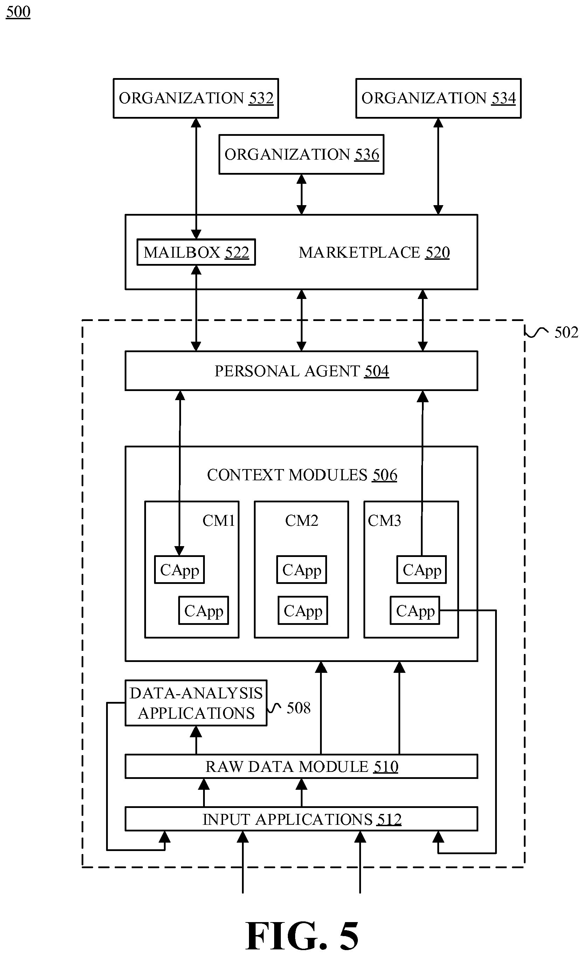

FIG. 5 depicts a fifth example distributed data-mining infrastructure, in accordance with at least one embodiment. In particular, FIG. 5 depicts an infrastructure 500 that includes organizations 532-536 in communication with a marketplace 520, which itself includes a mailbox 522. The infrastructure 500 further includes a WTRU 502 that itself includes a personal agent 504, context modules 506, data-analysis applications 508, raw data module 510, and input applications 512. The WTRU is also in communication with the marketplace 520.

The infrastructure 500 is an example of a system architecture and corresponding data exchange flow that may be used to implement a secure transfer of information relating to user data between a requesting party and a user, where the user data is stored on a device that is under the control of the user. In particular, FIG. 5 depicts a set of organizations 532-536 in communication with the marketplace 520. In turn, the marketplace 520 is in communication with the WTRUs of a plurality of users, where the WTRU 502 is a representative example.

The marketplace 520 includes the mailbox 520, which is a representative example of the many mailboxes that the marketplace 520 may include. Each such mailbox could be an anonymous ad-hoc mailbox, a trusted active mailbox, or any other type of mailbox, bulletin board, and/or the like deemed suitable by those of skill in the art for a given implementation. The marketplace 520 and the included mailboxes are in communication with the personal agent 504, shown here as residing on the WTRU 502. The system architecture further includes a set of context modules 506 (CM1, CM2, CM3), each of which includes a respective set of context applications (CApps). Context modules may be virtual machines or other mechanisms used to provide data security and integrity, for example by allowing only limited intercommunication between applications in different context modules.

The marketplace 520 can receive data from various CApps. Also, the personal agent 504, which could be implemented as software, firmware, or the like, may communicate with the various CApps. The system architecture further includes respective sets of data-analysis applications 508, raw data modules 510, and input applications 512. The set of input applications 512 can receive data from the set of data-analysis applications 508, the set of CApps, as well as various other sources (e.g., public and private compiled data sets, census data, etc.). The raw data module 510 receives data from the set of input applications 512. The raw data module 510 outputs data to the set of data-analysis applications 508 as well as to the set of context modules. Each CApp can make use of data sent as input to its corresponding context module.

The arrangement that is depicted in FIG. 5 may be used for various statistical purposes. For example, an organization in the set of organizations 532-536 might want to calculate an average value of a numerical property from individuals who satisfy a certain criterion. As a specific example, a requesting party might want to check an average income of a certain population group living in a certain geographical area using a certain sample size, e.g. N=200. The requesting party may write a query (using, e.g., SQL or other query language) to mine the necessary data. A query reply may contain information that may be generalized. For example, specific age values may be generalized to an age range, such as 20-30 or 30-40.

In some instances, a user's personal agent 504 may enforce one or more rules that restrict providing exact information, such as exact income-and-age information to the requesting party, as the inclusion of exact age and exact income could be used by a malicious organization to identify the user as a member of a group matching the criteria. Because the malicious organization may have access to public records (e.g., census data, tax information, etc.), this information could be used to identify the individual. If the match criterion is something that an individual does not want to be publicly known, there exists an anonymization and privacy problem.

In some examples, an individual associated with a personal agent 504 can communicate with a requesting party (or other party) via the mailbox 522. In some embodiments, including the embodiment that is depicted in FIG. 5, the mailbox 522 resides in the marketplace 520. Individuals represented by their personal agent 504, as well as requesting parties seeking data, may have a certified public/private RSA key pair. An organization running a campaign may publish the campaign in the marketplace. A user's personal agent 504 compares the published information regarding the campaign with predetermined criteria set by the user to determine whether the user is willing to participate in the campaign. The personal agent 504 further determines whether the user matches the published criteria for the campaign, and sends a signed-and-encrypted reply to the mailbox 522. However, as a result of this signed-and-encrypted reply, the requesting party may get too detailed information about individuals replying to the campaign e.g., exact income-and-age information. Consequently, embodiments disclosed herein may employ an active trusted element that is able to perform statistical calculations (e.g., average value) on data received at the mailbox 522. Such an active element is preferably located in a user-organization neutral zone. The mailbox 522 may provide communication services for network nodes having intermittent network access. It may be a static data transfer service that can be protected by encryption. Thus mailboxes may provide anonymity by hiding any identification of at least one party in each communication. A given mailbox may even hide identifications of both personal agents 504 and organizations 522.

In the example shown in FIG. 5, data extraction from the user's personal data storage takes place with the help of the context modules 506, which may encapsulate domain-specific personal data. Personal data is available to certain CApps, and to organizations 532-536 through the context modules 506. Each context module 506 contains data that CApps can use in data mining. A context module 506 may contain data relevant to a specific context or topic (e.g. travel, house). The data may originate from automatic and/or manual sources, and may be filtered out of the raw data module 510 to contain only data that relates to each specific context or topic. Examples of general context modules 506 are real-time context, finance, travel, home, fitness, entertainment, transportation, food, shopping, ownerships, hobbies, work; some context modules 506 may even be dedicated to highly sensitive data, such as health records or online-gambling data. There can be also more focused (narrower) context modules 506. For example there could be a subset of entertainment for movies, or subset of shopping for clothes-related data. There may also be information that defines portions of user data, such as basic descriptive data, such as contact data, household members, demographics, relationships, etc. This information can be used to provide a connection to different context modules 506 and CApps. The context modules 506 may combine different types of data. New context modules 506 can be created.

In some examples, a CApp is closely related to the context of a context module 506. In other examples, generic CApps can be provided to allow visualization of the personal data of a user and to enable a user to modify and update his or her personal data. In some examples, a CApp offers a service that combines different functionalities within a single CApp. Specific CApps can be used for data mining in the context modules 506. CApps can also indirectly communicate with the marketplace 520. Such communications may be conducted through the personal agent 504, which may check to ensure an appropriate level of user anonymity. In some embodiments, CApps have a user interface. In other embodiments, a CApp can be used that does not have a user interface.

To maintain users' trust in the system, it may be communicated to the users that the data in a context module 506 will be accessible to CApps and data requests from the marketplace 520. Further, if applicable, the user may be advised that the data may be sent to external parties. This communication may be made even though there are additional steps that a user can take to accept or reject CApp requests and/or data requests. The amount of data to be sent to the receiving party can vary from one piece of data to an extensive data set. Through the use of CApps, user data need not leave the user's system, shown here in dotted outline.

In order to make participation in the marketplace 520 easier for the user, the decisions of whether the user data should be shared or sold can be automated, at least in part, using the personal agent 504 to act on the user's behalf. In various examples, each personal agent 504 may be associated with a respective user and/or user device. The user can give initial values and rules that the personal agent 504 uses for making decisions on the data sharing. The personal agent 504 may determine whether the data request and/or operations to be executed on the data at the marketplace 520 meet the threshold security requirements set by the user.

It is noted that, as a general matter, the marketplace 520, perhaps in combination with providing the mailbox 522, could be considered a service such as the service 302. Moreover, a requesting party or requesting entity (e.g., the requesting entity 202) can be considered to be interchangeable with the service 302 and with the marketplace 520. The organizations 532-536 could be considered requesting parties, or could provide services such as the service 304 via the marketplace 520. In general, all of these entities represent computing devices, networks, and the like with which users may communicate via TEEs. In general, each user's (or each group of users') TEE may interface with an entity that is referred to herein as a personal agent, which may take the form of hardware executing software and/or firmware to carry out the personal-agent functions described herein. As is evident from the various architectures that are disclosed herein, a given personal agent and its associated TEE could be separate from one another or integrated together. Either way, the personal agent may act as a liaison between (i) its associated user's respective TEE and (ii) a requesting party, social-networking service, and/or the like. And certainly other arrangements are possible.

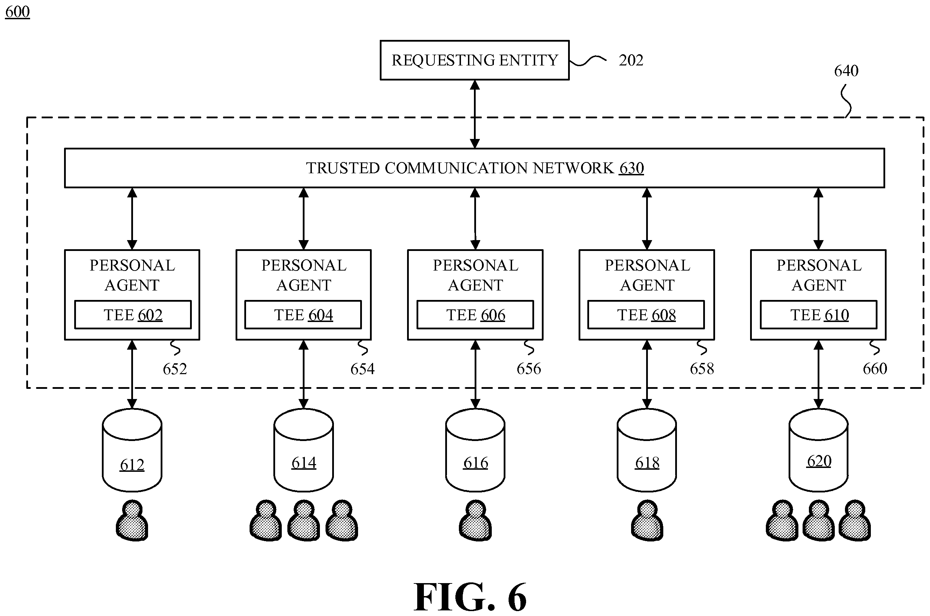

FIG. 6 depicts a sixth example distributed data-mining infrastructure, in accordance with at least one embodiment. In particular, FIG. 6 depicts an infrastructure 600 that includes elements that are somewhat similar to those of FIG. 2. Instead of the TEEs 102-110 and user-data stores 612-620, the infrastructure 600 of FIG. 6 includes TEEs 602-610 and corresponding user-data stores 612-620. Each TEE 602-610 is wrapped or encapsulated in a respective personal agent 652-660. It is those personal agents 652-660 that are in direct communication with the trusted communication network 630 of the trusted space 640. By way of example, the requesting entity 202 is depicted in FIG. 6 as being in communication with the trusted communication network 630, though this is by way of example, as the service 302, the marketplace 520, one or more of the organizations 432-436, and/or any other suitable entity could be there in the place of or in addition to the requesting entity 202. Moreover, in the example arrangement of FIG. 6, it is the personal agents 652-660 that are in direct communication with the respective user-data stores 612-620.

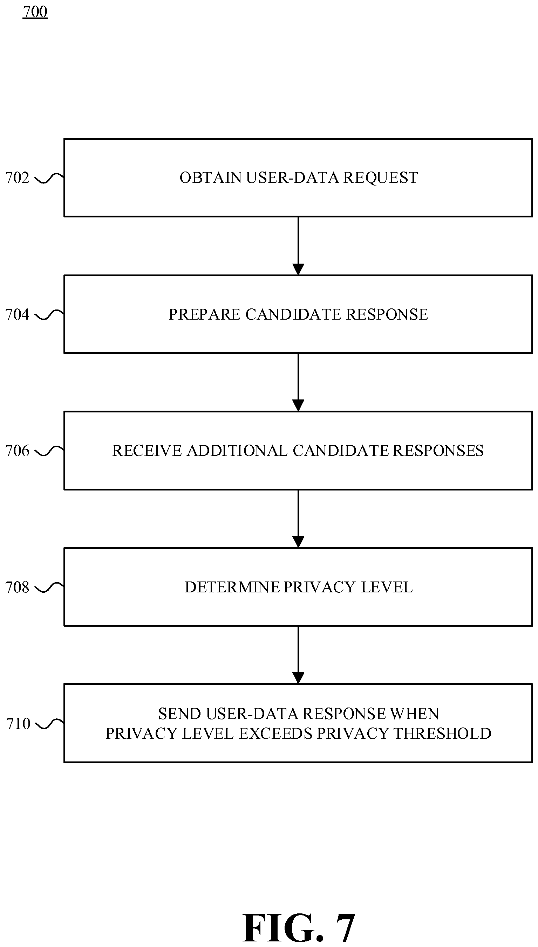

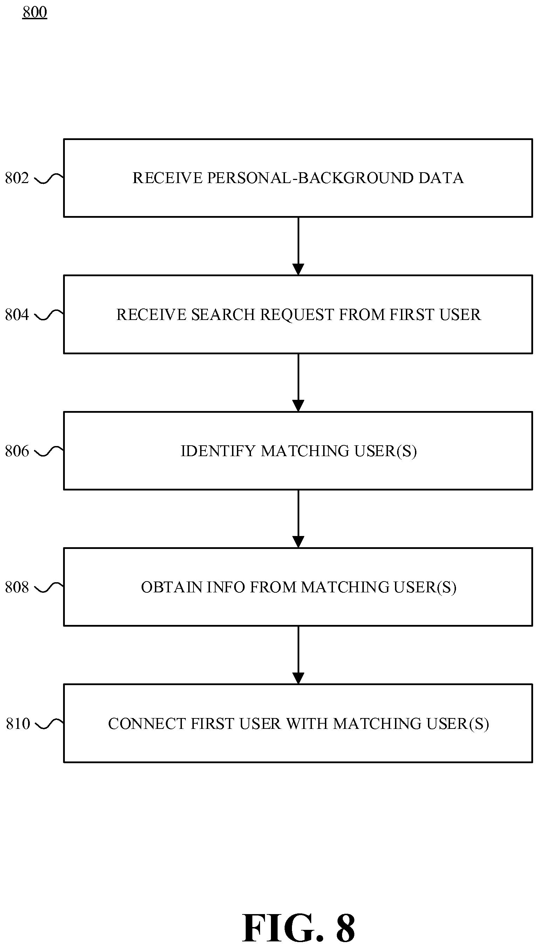

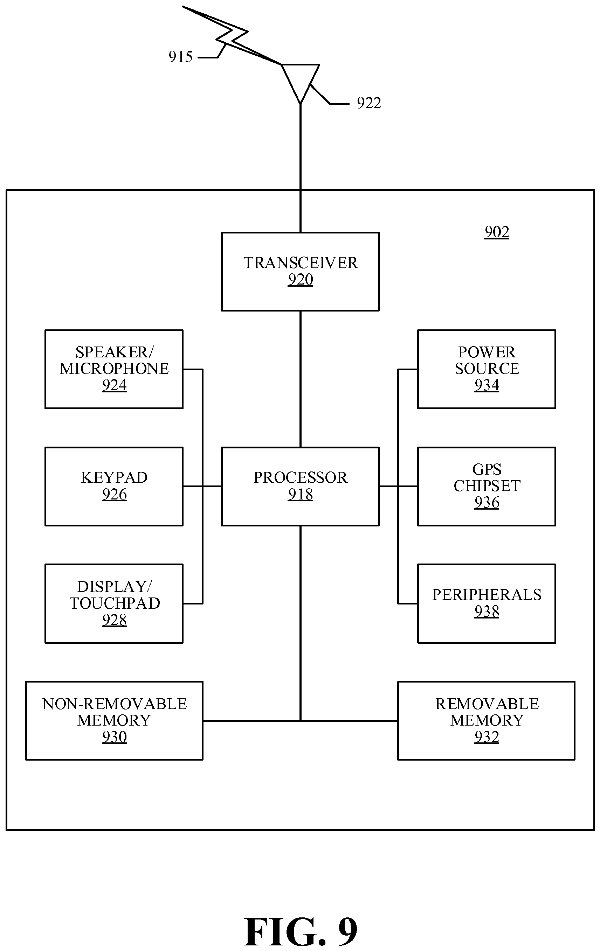

In general, in connection with the herein-described methods, description of a given TEE carrying out certain functions should be read as a flexible statement that could countenance an arrangement such as in FIG. 2 where the TEEs directly communicate with the user-data stores and with the trusted communication network, and that could also countenance an arrangement such as in FIG. 6 where the TEEs communicate with those entities via the wrapper of the associated personal agent. In general, either of the methods described below in connection with FIG. 7 or FIG. 8, or any of the variations on those methods that are described herein, could be carried out by any of the devices that are described in connection with any of FIGs. 9-12 or any other similarly equipped device in the context of any of the example infrastructures of FIGs. 1-6 or any similar infrastructure.

### 3. Example Operation

### a. First Example Method

FIG. 7 depicts a first example method, in accordance with at least one embodiment. In particular, FIG. 7 depicts a method 700 that is primarily described below as being carried out by the TEE 106 in the context of FIG. 2, though other examples are given as well. A non-limiting list of other entities that could carry out the method 700 includes the intermediary device 402 in the context of FIG. 4 and the TEE 606 (via the personal agent 656) in the context of FIG. 6. And certainly numerous other examples could be listed here. In some instances, the method 700 is carried out by a TEE; in some such instances, that TEE is associated with a single user and not with any other users. In some instances, the method 700 is carried out by an intermediary device such as a data-broker device or a data-aggregation device, as examples. As a reminder, and purely by way of example, the method 700 is described below as being carried out by the TEE 106 in the context of FIG. 2.

At step 702, the TEE 106 obtains a user-data request that is associated with the requesting entity 202. In some examples, the TEE 106 does this by receiving the user-data request from the requesting entity 202. In other examples, the TEE 106 does this by retrieving the user-data request from a network location (e.g., a secure bulletin board) to which the requesting entity 202 had previously posted that user-data request; in some such cases, the TEE 106 does so after determining that the user-data request satisfies certain criteria associated with the user-data store 116 with which the TEE 106 is associated. In some instances, the user-data request includes executable instructions (e.g., a query); in some instances, it does not.

At step 704, the TEE 106 prepares a first candidate response to the user-data request that the TEE 106 obtained at step 702. In an embodiment, the first candidate response is based at least in part on data that is associated with a first user; i.e., in this example, the first candidate response is based at least in part on data from the user-data store 116.

At step 706, the TEE 106 receives multiple additional candidate responses that are respectively based on data that is respectively associated with a plurality of additional users. These multiple additional candidate responses may be programmatically sent to the TEE 106, perhaps by multiple peer TEEs 102-104 and 108-110. In some cases, the TEE 106, upon obtaining the user-data request at step 702, sends out one or more requests for the additional candidate responses. The TEE 106 may send such a request to an entity that then fans the request out to the other TEEs, or the TEE 106 may send respective requests to the other TEEs, as but two example implementations. Whether the TEE 106 sends such a request for additional candidate responses to a coordinating entity or to the other TEEs 102-104 and 108-110, that request for additional candidate responses may include some or all of the user-data request. The TEE 106 may receive the additional candidate responses from a coordinating entity or from the respective other TEEs.

At step 708, the TEE 106 determines a privacy level of the first candidate response (that the TEE 106 prepared at step 704) based at least in part on the multiple additional candidate responses (that the TEE 106 received at step 706). The TEE 106 carries out step 708 to determine whether the user data that the TEE 106 has included in the first candidate response would be sufficiently non-unique in light of the combination of the first candidate response and the additional candidate responses so as to protect its associated user's privacy and anonymity a whatever threshold level of privacy the TEE 106 has been configured to enforce. It is noted that it matters not whether one or more of the peer TEEs will ever themselves respond to the original user-data request: the TEE 106 simply uses the received multiple additional candidate responses to assess the uniqueness of its own user's data in the first candidate response.

In some instances, the TEE 106 determines the privacy level of the first candidate response based at least in part on the total number of additional candidate responses that the TEE 106 received at step 706.

In some instances, the TEE 106 determines how many of the received additional candidate responses are similar (e.g., as to values in one or more data fields) to the prepared first candidate response, and determines the privacy level of the first candidate response based at least in part on how many similar additional candidate responses are identified. In some instances, the TEE 106 determines the privacy level of the first candidate response based on a percentage relationship of the similar number of additional candidate responses to the total number of additional candidate responses. And certainly other examples could be listed.

At step 710, the TEE 106 determines that the privacy level (that the TEE 106 determined at step 708) exceeds a privacy threshold, and responsively sends, to the requesting entity 202, a user-data response associated with the user-data request (that the TEE 106 obtained at step 702). The TEE 106 may have the privacy threshold stored in a data storage, and may retrieve that stored value and compare it with the determined privacy level as part of carrying out step 710. The user-data response may be (i.e., at least contain content that is) based at least in part on the first candidate response that the TEE 106 prepared at step 704. The user-data response may also be based at least in part on the multiple additional candidate responses that the TEE 106 received at step 706. The user-data response could include a statistical combination (e.g., an average) of data from the first candidate response and corresponding data from one or more of the additional candidate responses. In some instances, the user-data response consists of the first candidate response.

Moreover, in instances in which the determined privacy level does not exceed the privacy threshold, the TEE 106 may take appropriate responsive action, such as not sending the first candidate response, sending an indication to the requesting entity 202 that no substantive response to the user-data request will be forthcoming from the TEE 106, negotiating a second, different user-data request and response, and/or one or more other actions deemed suitable by those of skill in the art.

That is, if the first candidate response is excessively unique relative to the pool of received additional candidate responses, then the first candidate response may not be sent as a user-data response. Such could be the case if the received additional candidate responses are not similar to the first candidate response, or if the number or proportion of similar additional candidate responses is in general too low, (e.g. fewer than five total or fewer than 5% of the total candidate responses).

The trusted-computing features of TEEs operate to ensure confidentiality of the additional candidate responses that are received from other TEEs. In an embodiment, the trust in the TEE 106, which has received the user-data request, should guarantee at least the confidentiality of the received additional candidate responses. Each TEE may also enable measures to keep the trusted communication network 130 confidential and to prevent messages from being accessed by unauthorized or unreliable parties. The trusted communication network 130 may make use of encryption at least as to those messages that contain individually-identifiable information. Such encryption may be performed using a public-key cryptography method, addressed to a TEE that can be trusted by the user.

In an embodiment, the requesting entity 202 trusts computational equipment in the trusted space 140. The user-data request may contain confidential information, possibly business related, which should not become disclosed to unauthorized third parties. In an open system, it would be possible for a user-data request to be revealed, possibly breaching sensitive data. Therefore, in some embodiments, all computing in the trusted space 140 takes place in hardware-protected execution environments.

In at least one embodiment, the TEE 106 skips (i.e., ignores, silently discards, does not respond to, and the like) received user-data requests on a random basis, so as to lessen the ability of the requesting entity 202 to formulate reliable conclusions based on the TEE 106 not responding to one or more particular user-data requests. Thus, if the first candidate response would contain data associated with a rare case or instance that does not otherwise exist in the universe of candidate responses or user-data responses, then deciding not to respond to that user-data request would conspicuously disclose that rare case or instance, assuming that a response would always be expected. But if random skipping is instituted, then such conclusions could not reliably be drawn, and user privacy and anonymity would be enhanced.

Moreover, in some embodiments, the TEE 106 tags portions of personal data from the user-data store 116 as being designated as fully confidential, and accordingly the TEE 106 skips all user-data requests that pertain to one or more such designated portions. As such, even if the requesting entity 202 repeated a given user-data request multiple times, which would tend to overcome a random-skipping defense, the requesting entity 202 would never receive a user-data response that includes at least one portion of personal data that has been tagged as fully confidential. And certainly other example implementations could be listed here.

With respect to the calculation and provision of statistical information, the TEE 106 may calculate such statistical information (e.g., averages) within the trusted space 140, perhaps using data from both the first candidate response and one or more of the multiple received additional candidate responses. As an example, consider an instance in which the personal data in the user-data store 116 contains data reflecting the age and sex of the user that is associated with the user-data store 116, and in which the user-data request contains instructions to calculate an average age of female respondents. In an example in which the privacy threshold was five and the privacy level was based on the number of candidate responses that were from female respondents, the TEE 106 may calculate and respond to the requesting entity 202 with an average of all of the female ages if the number of candidate responses from female users was greater than five, and otherwise may not respond. And certainly numerous other example implementations could be listed here, as this is but one example.

It is noted that the implementation of some embodiments in infrastructures like that shown in FIG. 2 could result in a large amount of messaging traffic and possibly duplicative computation if the same user-data request is received by several different TEEs. An infrastructure such as that depicted in FIG. 4 could be helpful if the TEEs that did receive the user-data request were arranged to each send a single candidate response to the intermediary device 402, which could then assess the privacy level against one or more thresholds, and only provide particular and/or statistical responses consistent with such one or more thresholds. In some instances, the intermediary device 402 stores the user-data request to a data repository in the trusted space 140, and then informs the TEEs of the stored location, at which point the TEEs could fetch the user-data request for themselves.

In some instances, the intermediary device 402 stores candidate responses from the various TEEs and takes one or more of several possible actions. The intermediary device 402 may send those candidate responses either as an aggregated user-data response or as separate user-data responses to the requesting entity 202 if the privacy threshold has been exceeded. In some embodiments, the intermediary device 402 stores the candidate responses to a data repository in the trusted space 140, and lets the various TEEs access them. The other TEEs may decide whether or not to have their own candidate response included in calculating the user-data response, and may accordingly send the intermediary device 402 a message for allowance of such inclusion. Alternatively, the other TEEs may determine whether or not to send their own candidate response directly to the requesting entity 202.

It should be noted that direct communication between the TEEs 102-110 and the requesting entity 202 can be expected to increase transparency of the system in users' eyes, leading to increased confidence that the data will not be misused by someone else.

In some embodiments, the TEE 106 still sends some data to the requesting entity 202 even when a complete user-data response is not sent (i.e., even when the determined privacy level does not exceed the privacy threshold). In some instances, when the TEE 106 becomes aware of the results (i.e., the candidate responses) of other TEEs, the TEE 106 may return such a portion or modification of the first candidate response as would not compromise the mandated privacy of its associated user data. Indeed, the TEE 106 may negotiate a partial response with the requesting entity 202, potentially based on statistical analysis of the various additional candidate responses. And certainly other example implementations could be listed.

### b. Second Example Method

FIG. 8 depicts a second example method, in accordance with at least one embodiment. In particular, FIG. 8 depicts an example method 800 that could be carried out by any one of a number of different entities. By way of example and not limitation, the method 800 is described herein by way of example as being carried out by the intermediary device 402. Without limitation, in various different embodiments, entities such as the intermediary device 402 may carry out any of the peer-data-comparison embodiments described below.

At step 802, the intermediary device 402 receives personal-background data associated with a plurality of users, where the plurality of users includes a first user. At step 804, the intermediary device 402 receives a search request from the first user. At step 806, in response to the search request, the intermediary device 402 identifies at least one matching user based on the personal-background data that it received at step 802. At step 808, the intermediary device 402 obtains information from the at least one matching user, perhaps by sending one or more requests for information regarding personal data that is associated with the matching user(s) and receiving one or more corresponding replies from the matching user(s). At step 810, the intermediary device 402 connects the first user with the matching user(s), perhaps by sending to the first user some or all of the information regarding the matching user(s) that the intermediary device 402 obtained at step 808. In at least one embodiment, the method 800 is implemented at least in part in a TEE.

In general, users can employ existing social-media services to obtain support and advice for various life challenges. However, when they seek out such information, users are often required to share information regarding their situation. Users may be hesitant to reveal such information due to privacy concerns, even if revealing such information would allow them more readily to obtain helpful information. Even for users who may be willing to share private information, finding other users in similar situations may not be easy. Users do not necessarily want to share their detailed personal data with service providers because they cannot be sure how their data will be used and whether it will be sold to third parties.

A large amount of personal data is available about individual users in different services and systems. Users generally have very little control how their personal data is used, and they generally have no access to their own data. However, changes in legislation (e.g., European Commission Data Protection Regulation and the U.S. Consumer Privacy Bill of Rights) may change the way service providers support users by giving easier access to their own data.

Relating to information on living expenses, some existing energy companies (e.g., Fortum Valpas service and Vattenfall in Europe) offer services in which a user can compare his or her energy consumption to that of other households. These companies have data only relating to energy consumption, but not information about other living expenses such as waste-management costs, maintenance costs, and water-consumption costs. Comparison is usually based on statistics, such as average energy consumption of apartments. Average energy consumption is based on general information about house types such as row house, apartment building, detached house, and information on the number of residents. Statistics are also available regarding the average annual energy consumption of different equipment within a residence, such as refrigerators, dishwashers, washing machines, cooking appliances, home electronics, and lightning. Moreover, the Numbeo service is an example of a service that compares living costs in different cities or countries in the world. It utilizes user generated data for calculating statistics.

Embodiments of the present disclosure provide systems and methods that allow users to find other users in similar situations and to share data in secure and anonymous ways. Private data may be shared only with selected users in the same situation. Users may have access to their own personal data to allow for versatile data comparisons.

Once users have easier access to their data, stored in personal data accounts, they can combine and compare different kinds of personal data relating to different aspects of their lives. This makes it easier and more meaningful to collect and analyze different types of data, and this data can be employed by users to compare their own situations to situations of other people. Users may be enabled to learn from others, share experiences and to give advice and support for other users in similar situations. Embodiments of the present disclosure provide users with a secure way to find, share, and compare their data and experiences with other users in similar situations. Versatile and detailed personal data from users makes it possible in some embodiments to create more accurate comparisons than can be achieved with purely statistical approaches.

In various embodiments, comparisons can be related to certain life events such as illness, moving abroad, or renovating a house to meet requirements of a user's new disabilities. Comparisons can be related to daily living, such as living expenses or fitness. Embodiments disclosed herein allow users to obtain support and advice from other users in similar life situations. Users may be enabled to find similar users and share personal data in secure and anonymous ways only with selected users in the very same or a very similar situation.

For example, living costs of a household is a major monthly expense. Advice regarding decreasing living expenses could help to save money. Advice may also be used to help protect the environment with tips regarding more ecological living. There are many different variables that can effect living expenses, such as type and size of the house, number of household members, location, consumption of water and energy, selected heating and cooling system, equipment of house, waste-management costs, rent or loan costs, and maintenance costs, among others.

To be able to compare living patterns and living expenses with living expenses of similar households and to be able to learn from others, it is useful to collect versatile information regarding household and living expenses. Methods for calculating living expenses may combine data from several sources, such as data from house-monitoring systems, bank statements, and shopping lists. Household-expense data may be automatically collected from user accounts, such as from bank accounts, credit-card accounts, or utilities accounts of the user. House-monitoring systems can be used to reveal the consumption history of the family. In general, the more accurate the information is, the more the system is able to make relevant recommendations for changing living habits and reducing costs of living.

Traditionally, comparisons regarding living expenses have been made based on statistical information about different households and based on only few variables affecting living costs. In embodiments in which users are provided with access to their own personal data relating to lifestyle, it is possible for users to share living and consumption profiles and expenses with other households and to obtain similar information from other households. This enables comparison of living data and expenses with data from similar households.

In an embodiment, a method is provided for comparing living expenses between a first household and a plurality of other households. The living expenses depend on characteristics of the household. Relevant characteristics can be stored as household parameters. The household-expense data may be stored at one or more of a plurality of storage locations accessible by users. Each user may have his or her own distributed storage location.

In an embodiment, a requesting user publishes one or more of his or her own household parameters. At least a portion of the posted data may be used as search criteria for requesting at least one data element from similar households. The posted household-parameter data is preferably protected from unauthorized use. A comparison system detects similarity of at least one household by comparing said search criteria to at least one data element of a plurality of households.

In response to the posted household parameter or parameters, one or more similar households may send a response to the requesting household that includes at least a portion of the requested data elements. The response data is preferably protected from unauthorized use. A comparison is performed between the data elements of the requesting user's household and the received data elements. The comparison is preferably processed in a computing environment trusted by the replying households.

In some embodiments, users are able to utilize TEEs, and the protection of posted data against unauthorized use is based at least in part on encryption of the posted data. Decrypting keys may be distributed to a plurality of TEEs that have access to other households' data. Detecting similarity between households preferably takes place in the TEEs.

In some embodiments, the requesting household is able to utilize a TEE. Protection of responses against unauthorized use may be performed at least in part by encrypting at least a portion of the responses and having the decrypting keys distributed to the TEE. The decrypting keys may be common to all of the TEEs.

Some embodiments make use of a peer-data-comparison service. A plurality of households send at least a portion of their household information as posted data to the service. The service compares different households' posted data and sends to at least one similar household a request to respond to the posted data.

Some embodiments of the present disclosure enable users to search for other users in similar situations, to request information and experiences from other such users, and to compare users' personal data to the requested information. The users' personal data, lifestyle tips, and experiences can be stored in decentralized storage locations, with each user being in control of his or her own data. Information accessed for comparison purposes is preferably based on real data of similar users. Requests, responses, and comparisons may be protected against unauthorized use at least in part by encrypting data and by having the decrypting keys distributed to the requesting users in a TEE.

In an exemplary implementation of the comparison functionality, households are able to search for similar households, to request living information and living expenses from similar households, and to compare their living expenses. Responses to inquiries may also include descriptive text such as, for example, explanations, advice, and narrative experiences from the responding household.

In some embodiments, a requesting user publishes posted data containing search criteria (personal data) to find users in similar situations. The requesting entity can be also a household or some other group of users whose personal data is available for comparison. Depending on the user's situation, the criteria may be related to different parts of personal data. In the scenario of comparing households' living expenses, the criteria might be data regarding the inhabitants of the household and/or other criteria relating to information about the dwelling, living pattern, and location. Household information and household expenses may be collected from one or several sources combining versatile information that relates to lifestyle. Requested information can include household expense data and optionally other household information, such as appliances or other equipment in the house, along with other consumption data.

Data can be queried from other users (or households) via a service that requests responses from users (or households) matching the search criteria. Additionally or alternatively, data can be queried directly from other users by sending search criteria as a notification, e.g., to an electronic bulletin board. In embodiments making use of a service, the service may provide analysis, comparison, and visualization components that requesting entities can run in a TEE.

In at least one embodiment, a requesting user performs a comparison between data elements of its own personal data (e.g., household expenses) and received data elements. The best solutions are searched, for example, for a household for which water consumption and expenses are the lowest. The requester performs a comparison, and based on the result may ask additional questions from the respondents. The comparing component may include functionalities for visualization of the results. The comparing component may also include the functionality of calculating statistical values from the responses.

In one example, in the household scenario, one responding household may have very low electricity costs and another responding household may know how to save in water expenses. The requesting household may send additional requests for further explanations. The requesting user may request explanations, advice, and information on additional experiences through a service or by sending notification to a bulletin board. A software agent operating on behalf of the responding entity may deliver the request to the respondent and may add additional information about its own situation. The explanations of the responding user can be stored to the user's personal data storage, making the data available if it is requested by other users. And certainly other example implementations could be listed.

While this exemplary scenario describes the comparison of household information, similar functionalities can be applied to other personal data as well. Another example use case is a person moving from one location to another. First, the user collects information in order to decide whether to move or not, and once the decision has been made, the user collects information on how to carry out various daily matters in the new location. Before a decision to move is made, living expenses in the new location may be important information for the user. After the move, hints and recommendations from others in similar situations are likely to gain importance. Individuals in similar situations may include people that share similar interests (e.g. those with interest in the outdoors may have knowledge and experience about the local facilities), similar values, and those who are living near the new location.

In at least one embodiment, a user can obtain information on experiences and recommendations relating to a given neighborhood, including information on infrastructure, services, environment, safety, flexibility and availability of public transportation, availability of parking places, availability, variety and quality of services such as healthcare, education, shops, day care centers, fitness centers and leisure activities, as examples. This information is often reliably available only from people living in the neighborhood for some amount of time. Because the views and experiences of just a few individuals are likely to reflect personal experiences and biases, it can take a substantial amount of time to collect sufficient information to provide reliable, unbiased assessments.

In some instances, information is available from similar people in proximity to the user's area of interest, openly and anonymously. There may be some sensitive information that people are not willing to share publicly, but that still affect a user's life. Sometimes disabilities, restrictions, and preferences have to be taken into account in everyday life, e.g., physical handicaps, respiratory allergies, and sensitivity to noise are issues that are often related to a specific living environment. When searching for individuals with uncommon interests or in rarely-encountered situations, the definition of proximity may be stretched to cover a larger population. By finding people who are dealing with similar issues or have already solved them, new inhabitants can get valuable and unbiased information. Thus, the peer data comparison enables users to get and offer peer support in focused and safe way, without the need to reveal details of their life publicly in social-media networks.

Some of the above-described embodiments pertain to the use of peer groups for sharing of information. Embodiments described herein can also or instead be applied to several other areas of living, as mentioned, whenever a peer group can be defined and data from them is available. As a further note, a definition of a given peer group does not have to be binary, with each individual (or group or family or household etc.) either being in or out of that given peer group. Rather, a variable weighting may be used to identify an individual's level of affinity or identification with a peer group or with individuals within such a group. Similarity can be based on several aspects, e.g., demographics, address, incomes, and it can also be evaluated by comparing personal background of other people. And other examples could be listed as well.

In some embodiments, the personal background of a given user may be disclosed in a form of personal metadata indicative of personal data in a personal-data account. For instance, a person who is interested in repairing '74 Pontiac GTOs and has his hobby properly documented in the personal-data account is likely to have lots of metadata related to automotive parts and that particular model. In this case, metadata could be "GTO parts," not disclosing each valve, carburetor, and tire, which can then be considered as data itself. The indication that the person is interested in GTOs can be calculated from the related metadata. In most cases it would be enough and even more feasible to compare and possibly disclose metadata instead of actual data, since the metadata may describe more generic terms, which are easier to compare. Furthermore, when more generic terms are disclosed, the risk of a privacy breach diminishes. In another related embodiment, the metadata is mapped to ontologies, providing an upper-level description of the data. For instance, if a person owns a cat, the more generic term in ontology would be "pet," making it easier to find pet stores for buying cat food and accessories.

One example embodiment takes the form of a method for comparing personal data of a user with personal data of other users in similar situations. Personal data includes different data elements that have unique identifiers. Personal data can be collected from several sources, including both manual and automatic data sources. Data elements relating to a certain situation may combine different types of data. The personal data may be stored in decentralized storage locations, with each user being in control of his or her own data. In some instances, a minimal portion of a user's personal data is stored in a centralized database of a service. In that case, a user has decided which data elements he or she will share with the service. The data in the centralized storage is used to find similar users. The service delivers requests to similar users. Such embodiments support peer data comparison. A requesting user can receive responses directly from other users with help of the other users' personal software agents. The data is delivered anonymously. This data is used to compare data between the requesting user and responding users. The requests, responses, and comparisons may be protected against unauthorized use at least in part by encrypting data and by having the decrypting keys distributed to the requesting users in a TEE.

In some embodiments, users have registered to use a service that enables them to compare their personal data with the personal data of other users in similar situations. The users using the matching service may have posted at least some basic data elements of their personal data to the service, which will use this information to find similar users and for sending requests to those similar users. The user can decide which data elements he or she wants to post in data requests and responses. Users are able to utilize a TEE, and responses are protected against unauthorized use at least in part by using encryption of response data and by having the decrypting keys distributed to the requesting households in the TEE.

In an example scenario, the requesting user posts information as search criteria to the service, and the posted data is protected from unauthorized use, perhaps by using encryption and decryption keys. The service identifies users that match the search criteria and delivers requests to those matching users. Personal agents of one or more users respond to the request and post all or part of the requested data elements to the requesting user. The response is protected from unauthorized use, and may be sent directly to the requesting user, or it may be sent to the user through the matching service. In the latter case, the matching service may delete the response after forwarding it to the requested user.

The personal agent of the user may operate according to predefined rules as to what data can be shared for what reasons and under what circumstances. These predefined rules may relate to number of candidate responses from other users, number of similar responses, uniqueness of particular data, and/or one or more other data-sharing criteria mentioned herein or otherwise deemed suitable by those of skill in the art for a given implementation.

In an example, the requesting user performs a comparison between his or her own data elements and received data elements. This comparison may be processed in a TEE. Based on the result of the comparison, the requesting user may ask additional questions (e.g., he or she may ask for more information about experiences) from the selected respondents. The requesting user may send the request to a service that delivers it to the selected user. The responding user may answer the queries, and the response may be sent to the requesting user with help of a personal agent of the responding user. The user-created response to the request may be updated as a new data element to the personal data of the responding user. If other users will request similar data, the response may be made available to them.

In various different embodiments, the process of finding matching users may be performed in a variety of ways. Matching can be performed by comparing household parameters of the requesting user with other users. The household parameters considered may include parameters such as dwelling location, dwelling type, number of rooms, dwelling size, types of appliances, household-monitoring data, number of occupants, age of occupants, and gender of occupants, as examples. Matching may be performed using exact matching as to one or more household parameters or by using different measures of similarity between household parameters. Comparison of parameters from two different households may be used to generate a similarity measure for the two households, and a match may be found if the similarity measure is above a threshold value. The threshold value may be a predefined value, or it may be adjusted based on the number of matching households found. In some embodiments, a particular number of households with the highest similarity measure may be selected as matching. Various other techniques for identifying and ranking matches are well known to those skilled in implementing search technologies.

A TEE can be implemented in many ways, such as utilizing a hardware-based TEE or using software-based techniques as executed by hardware. In addition to security, flexibility and compatibility with existing operating systems should be taken into account when selecting a method for implementing a TEE.

In some embodiments, requests for information regarding similar users are exchanged on a peer-to-peer basis without the need for a comparison service. Each user can post data containing search criteria for finding users in similar situations as a notification to, e.g., an electronic bulletin board. Since the search criteria contain information about the requesting user, at least a portion of the criteria may be protected against unauthorized use. In some embodiments, each user is able to utilize respective TEEs. In some embodiments, each user has his or her own TEE. The TEEs can receive and process encrypted messages, such as search criteria, without disclosing any decrypted data to their owners.

In an embodiment, a requesting user encrypts at least a portion of the search criteria in such a way that only the receiving TEEs can open the search criteria. For simplicity, the decrypting keys may be common to all of the TEEs. The TEEs may have access to other users' data, and the similarity detection can take place in these trusted environments. The responses can be protected against unauthorized use at least in part by encrypting the responses and having the decrypting keys distributed to the TEE of the requesting user. And other example implementations could be listed here as well.

In accordance with some embodiments, a requesting user posts search criteria to his or her own TEE. The personal agents of other users read the requests and check whether the search criteria match their respective user's situation. If the search criteria and possibly other rules are fulfilled, the personal agent of the other user responds to the request by sending at least some of the requested data. The received data is compared to the information of the requesting user in the user's own TEE. The result is presented to the requesting user. The requesting user may request additional information from the selected responding user by, e.g. posting the request to an electronic bulletin board using his or her TEE. The personal agent of the responding user delivers the request to the responding user, who may send additional responses through his or her personal agent to the requesting user. The user-created response to the request may be stored as a new data element in the personal data of responding user. This way, if other users request similar data, the response may be made available to those users.

In one example embodiment, users can compare the household expenses of their own household with those of other similar households. Household search criteria posted by a requesting household is matched to information of responding households. The household information is based on data elements, such as data regarding the inhabitants (e.g., number, age, gender) in the household, characteristics of the dwelling (e.g., house type, size, number and types of rooms), information about appliances and other equipment (e.g., refrigeration devices, dishwasher, washing machine, cooking devices, home electronics, and lightning) in the house, household expense data, household consumption data, house-monitoring data, living pattern of the family, and location of the house, as examples. Each data element may have a unique identifier. The family's household information may be collected from one or several data sources (e.g., house-monitoring systems, bank statements, shopping lists), including both manual and automatic data sources. Household information can include versatile information relating to different household expenses such as cost of energy, water, waste management, maintenance, and loans/rent of the house. The household information and expenses are stored in decentralized storages, each family being in control of their own data.

In connection with at least one embodiment, households register to use a service that enables them to compare their household expenses to the household expenses of the similar households. The households using the service have posted at least some basic data elements of household information to the service, which uses this information to find similar households. The service also enables sending of requests to the households. For example, an index of household-inhabitant data could be stored in the data storage of the service. The actual household expense and consumption data and other data elements describing the household in more detail can be stored in the data storage that is accessible (by default) only to one or more members of the household. The household can decide which data elements it wants to post in data requests and responses. Households are provided with the ability to utilize a TEE. Responses can be protected against unauthorized use at least in part by encryption of response data and by having the decrypting keys distributed to the requesting households in the TEE.

The requesting household may post its information as search criteria to the service. The posted data may be protected from unauthorized use. The service delivers the requests to the households that match the search criteria. Personal agents of one or more households respond to the request and post all or part of the requested data elements to the requesting household. The response may be protected from unauthorized use. The software agent may operate according to predefined rules regarding which data can be given to which purpose and under what circumstances. The requesting household performs a comparison between data elements of its own household expenses and received data elements. The comparison is processed in a trusted environment. As described above, the requesting household may seek additional information from selected household(s). For example, one responding household may have very low electricity costs and other household may have low water expenses. The requesting household may send additional requests asking for explanations and/or advice regarding low expenses. The requesting household may seek explanations, hints, and additional experiences from responding households through a service and get answers through the personal agent of the responding user. And other example implementations could be listed.

In a further embodiment, each household can post data containing search criteria for finding similar households as, e.g., a notification to an electronic bulletin board. Since the search criteria contains information of the requesting household, at least a portion of the criteria may be protected against unauthorized use. In this embodiment, households are able to employ TEEs. In some instances, each household can have its own TEE. The TEEs can receive and process encrypted messages, such as search criteria, without disclosing any decrypted data to their owners. In this embodiment, the requesting household encrypts at least a portion of the search criteria in such a way that only the receiving TEEs can decrypt the search criteria. For simplicity, the decrypting keys may be common to all of the TEEs. The various TEEs may have access to other households' data, and the similarity detection may take place in these TEEs. The responses may be protected against unauthorized use at least in part by encrypting the response and by distributing the decryption keys to the TEE of the requesting household.

In at least one further embodiment, a requesting household posts search criteria to its own TEE. The personal agents of participating households read the request and check whether the search criteria match the household associated with the agent. If the search criteria and possibly other rules are fulfilled, the personal agent of the household responds to the request by sending at least some part of the requested data. The received data is compared to the information of the requesting household in the household's own TEE. The result is presented to the requesting household. In the manner described with respect to other embodiments, the requesting household may seek additional information from selected responding household(s).

Certain embodiments are further elucidated using an example. Suppose users Jack and Jane live with their three teenaged daughters in a detached house. They have a living room, 4 bedrooms, a kitchen, two bathrooms with showers, a utility room, and a garage. The house employs the latest energy-saving techniques and is provided with sensors to monitor how the family lives in the house. The monitoring system collects comprehensive information from the house. For example, there may be lighting, motion, humidity, and temperature sensors for each room. The sensors are able collect information regarding the lifestyle patterns of the family. There is also an advanced burglar alarm system with smoke detectors and functionality to unlock doors remotely for alarm inspections. Jack has purchased a service that allows him to store all the information in the family's personal cloud. Also, other information such as shopping history or bank statements can be stored to the cloud for analysis. There are tools to calculate useful summaries from the data.

Jack has noticed that the household maintenance and living costs (electricity, water, etc.) seem unusually high. Jack wants to compare his family's living and consumption profiles with those of other households that have similar characteristics. This can be done with help of a "Families Like Us" service. Jack is concerned about revealing his data to such a service. However, with a service according to some embodiments of the present disclosure, Jack is required only to post to the service the basic description of his household. He posts to the service information about his family members: the number of inhabitants, their age and gender, and characteristics of the house such as type and size. Other household information is kept under his control in a trusted environment (e.g., a TEE).

Jack posts to the service a request to get household-expense information from families similar to his. Jack gets responses from several families, and he compares his family's patterns with those of other similar households. Jack notices that the family's electricity consumption is about the same as others', but their electricity is much more expensive. This encourages Jack to seek better offers from energy companies. Jack also notices that the family's water consumption is much higher than that of other households with the same number of people. He decides to show the results to his family and demonstrates how small changes in their living habits can influence the cost of living. The information may reveal that the excessive water use is attributable not to the time spent in the shower, but to the flow rate of the shower head. This information allows Jack to determine that a new shower head would be a wise investment. Jack also learns that the family spends five percent less than similar households on waste management. Other families can benefit and learn from their waste-management profile. And certainly numerous other examples could be listed here.

### 4. Examples of Architecture for Implementation

Both the below-described example WTRUs and example networked servers are examples of computing systems that could be equipped, programmed, and arranged to carry out one or more of the methods described herein. Among the devices and entities that are described above that could be implemented with an architecture similar to that described below with respect to FIGs. 9-12 include the TEEs 102-110, the user-data stores 112-120, the requesting entity 202, the service 302, the intermediary device 402, the organizations 532-536, the marketplace 520, the mailbox 522, and the WTRU 502. And others could as well, as this list is provided by way of example and not limitation.

Various hardware elements of one or more of the described embodiments can be implemented as modules that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as random-access memory (RAM), read-only memory (ROM), and the like.

### a. Example WTRUs

FIG. 9 depicts a first example WTRU, in accordance with at least one embodiment. In some embodiments, the systems and methods described herein are implemented in a WTRU, such as the WTRU 902 that is depicted in FIG. 9. As an example, an IoT-enabled sensor may be implemented using one or more software modules on a WTRU.

As shown in FIG. 9, the WTRU 902 may include a processor 918, a transceiver 920, a transmit/receive element 922, a speaker/microphone 924 (perhaps including at least two microphones and at least two speakers, which may be earphones), a keypad 926, a display/touchpad 928, a non-removable memory 930, a removable memory 932, a power source 934, a global positioning system (GPS) chipset 936, and other peripherals 338. It will be appreciated that the WTRU 902 may include any sub-combination of the foregoing elements while remaining consistent with an embodiment. The WTRU 902 may communicate with nodes such as, but not limited to, base transceiver station (BTS), a Node-B, a site controller, an access point (AP), a home node-B, an evolved home node-B (eNodeB), a home evolved node-B (HeNB), a home evolved node-B gateway, and proxy nodes, among others.

The processor 918 may be a general-purpose processor, a special-purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGA) circuits, any other type of integrated circuit (IC), a state machine, and/or the like. The processor 918 may perform signal coding, data processing, power control, input/output processing, and/or any other functionality that enables the WTRU 902 to operate in a wireless environment. The processor 918 may be coupled to the transceiver 920, which may be coupled to the transmit/receive element 922. While FIG. 9 depicts the processor 918 and the transceiver 920 as separate components, it will be appreciated that the processor 918 and the transceiver 920 may be integrated together in an electronic package or chip.

The transmit/receive element 922 may be configured to transmit signals to, or receive signals from, a node over an air interface 915. For example, in one embodiment, the transmit/receive element 922 may be an antenna configured to transmit and/or receive RF signals. In another embodiment, the transmit/receive element 922 may be an emitter/detector configured to transmit and/or receive IR, UV, or visible-light signals, as examples. In yet another embodiment, the transmit/receive element 922 may be configured to transmit and receive both RF and light signals. It will be appreciated that the transmit/receive element 922 may be configured to transmit and/or receive any combination of wireless signals.

In addition, although the transmit/receive element 922 is depicted in FIG. 9 as a single element, the WTRU 902 may include any number of transmit/receive elements 922. More specifically, the WTRU 902 may employ what is known in the relevant art as multiple-input and multiple-output (MIMO) technology. Thus, in one embodiment, the WTRU 902 includes two or more transmit/receive elements 922 (e.g., multiple antennas) for transmitting and receiving wireless signals over the air interface 915.

The transceiver 920 may be configured to modulate the signals that are to be transmitted by the transmit/receive element 922 and to demodulate the signals that are received by the transmit/receive element 922. As noted above, the WTRU 902 may have multi-mode capabilities. Thus, the transceiver 920 may include multiple transceivers for enabling the WTRU 902 to communicate via multiple RATs, such as UTRA and IEEE 802.11, as examples.

The processor 918 of the WTRU 902 may be coupled to, and may receive user input data from, the speaker/microphone 924, the keypad 926, and/or the display/touchpad 928 (e.g., a liquid crystal display (LCD) unit or organic light-emitting diode (OLED) unit). The processor 918 may also output user data to the speaker/microphone 924, the keypad 926, and/or the display/touchpad 928. In addition, the processor 918 may access information from, and store data in, any type of suitable memory, such as the non-removable memory 930 and/or the removable memory 932. The non-removable memory 930 may include RAM, ROM, a hard disk, or any other type of memory storage device. The removable memory 932 may include a subscriber identity module (SIM) card, a memory stick, a secure digital (SD) memory card, and/or the like. In other embodiments, the processor 918 may access information from, and store data in, memory that is not physically located on the WTRU 902, such as on a server or a home computer (not shown).

The processor 918 may receive power from the power source 934, and may be configured to distribute and/or control the power to the other components in the WTRU 902. The power source 934 may be any suitable device for powering the WTRU 902. As examples, the power source 934 may include one or more dry-cell batteries (e.g., nickelcadmium (NiCd), nickel-zinc (NiZn), nickel metal hydride (NiMH), lithium-ion (Li-ion), and the like), solar cells, fuel cells, and/or the like.

The processor 918 may also be coupled to the GPS chipset 936, which may be configured to provide location information (e.g., longitude and latitude) regarding the current location of the WTRU 902. In addition to, or in lieu of, the information from the GPS chipset 936, the WTRU 902 may receive location information over the air interface 915 from a base station and/or determine its location based on the timing of the signals being received from two or more nearby base stations. It will be appreciated that the WTRU 902 may acquire location information by way of any suitable location-determination method while remaining consistent with an embodiment.

The processor 918 may further be coupled to other peripherals 938, which may include one or more software and/or hardware modules that provide additional features, functionality, and/or wired or wireless connectivity. For example, the peripherals 938 may include an accelerometer, an e-compass, a satellite transceiver, a digital camera (for photographs or video), a universal serial bus (USB) port, a vibration device, a television transceiver, a hands free headset, a Bluetooth® module, a frequency modulated (FM) radio unit, a digital music player, a media player, a video game player module, an Internet browser, and/or the like.

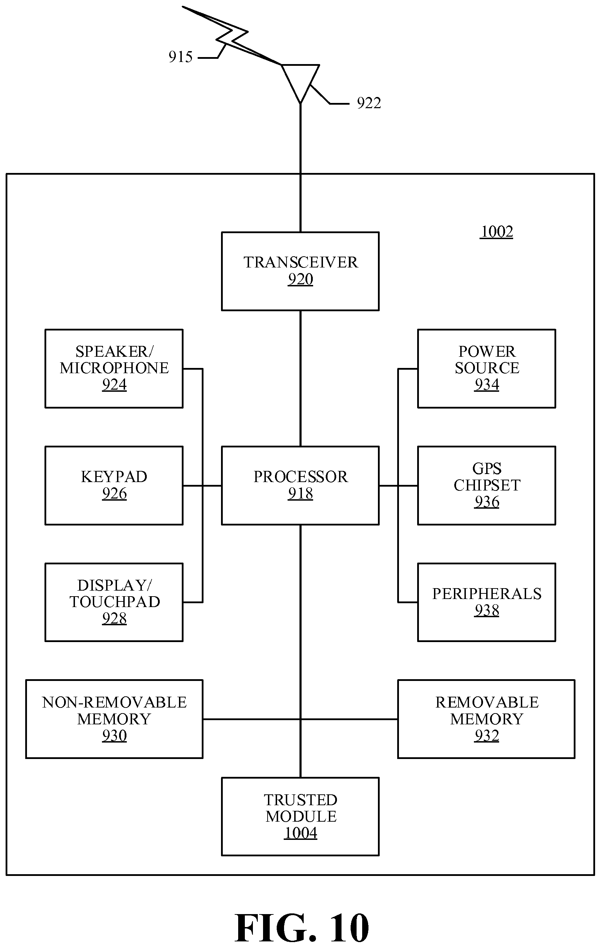

FIG. 10 depicts a second example WTRU, in accordance with at least one embodiment. In particular, FIG. 10 depicts a WTRU 1002 that includes all of the elements of the above-described WTRU 902 of FIG. 9, and further includes a trusted module 1004. In some embodiments, the trusted module 1004 takes the form of or at least includes a TEE. In some embodiments, the trusted module 1004 takes the form of or at least includes a trusted data-mining sandbox. The trusted module 1004 may include any combination of (i) hardware (e.g., an FPGA) and (ii) software or firmware deemed suitable by those of skill in the relevant art for a carrying out one or more of the functions described herein.

### b. Example Networked Servers

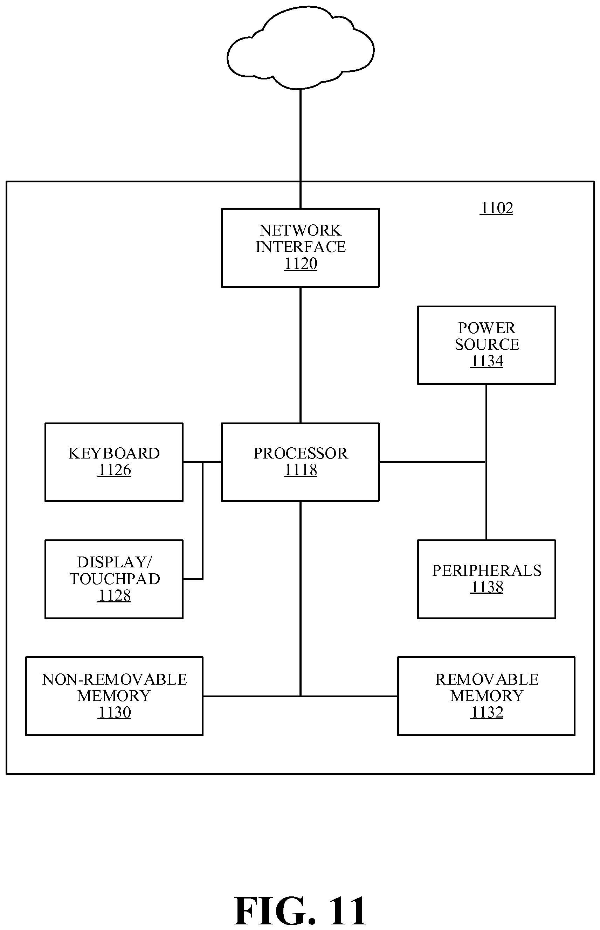

FIG. 11 depicts a first example networked server, in accordance with at least one embodiment. In some embodiments, the systems and methods described herein are implemented in a networked server, such as the server 1102 that is depicted in FIG. 11. For example, a trusted execution environment, such as a trusted data mining sandbox, may be implemented using one or more software modules on a networked server.

As shown in FIG. 11, the server 1102 may include a processor 1118, a network interface (e.g., transceiver) 1120, a keyboard (or keypad) 1126, a display/touchpad 1128, a non-removable memory 1130, a removable memory 1132, a power source 1134, and other peripherals 1138. It will be appreciated that the server 1102 may include any sub-combination of the forgoing elements while remaining consistent with an embodiment. The server 1102 may be in communication with the Internet and/or with proprietary networks.

The processor 1118 may be a general-purpose processor, a special-purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGA) circuits, any other type of integrated circuit (IC), a state machine, and/or the like. The processor 1118 may perform signal coding, data processing, power control, input/output processing, and/or any other functionality that enables the server 1102 to operate in a wired or wireless environment. The processor 1118 may be coupled to the network interface 1120. While FIG. 11 depicts the processor 1118 and the network interface 1120 as separate components, it will be appreciated that the processor 1118 and the network interface 1120 may be integrated together in an electronic package or chip.

The processor 1118 of the server 1102 may be coupled to, and may receive user input data from, the keyboard 1126, and/or the display 1128 (e.g., an LCD unit or OLED unit). The processor 1118 may also output user data to the display/touchpad 1128. In addition, the processor 1118 may access information from, and store data in, any type of suitable memory, such as the non-removable memory 1130 and/or the removable memory 1132. The non-removable memory 1130 may include RAM, ROM, a hard disk, or any other type of memory storage device. In other embodiments, the processor 1118 may access information from, and store data in, memory that is not physically located at the server 1102, such as on a separate server (not shown).

The processor 1118 may receive power from the power source 1134, and may be configured to distribute and/or control the power to the other components in the server 1102. The power source 1134 may be any suitable device for powering the server 1102, such as a power supply connectable to a power outlet.

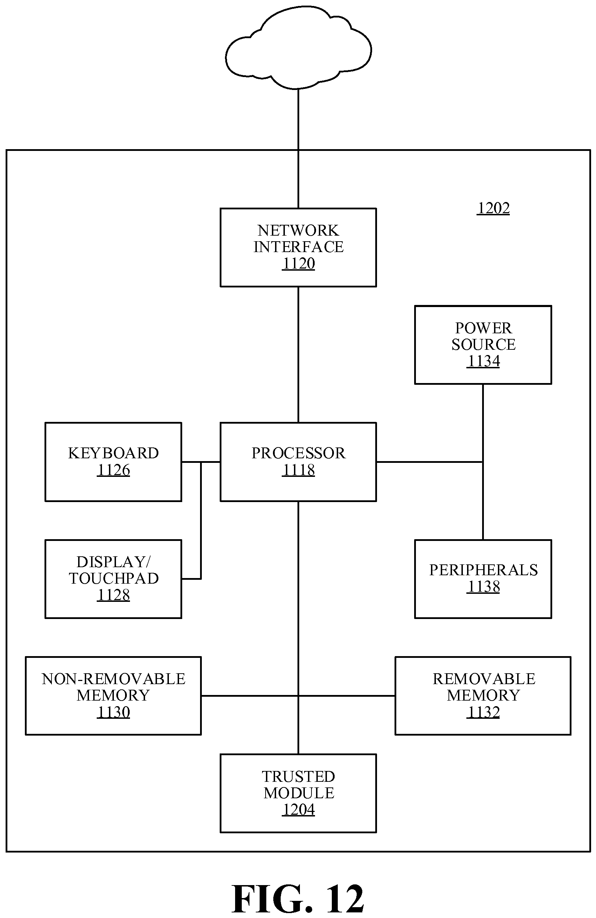

FIG. 12 depicts a second example networked server, in accordance with at least one embodiment. In particular, FIG. 10 depicts a networked server 1202 that includes all of the elements of the above-described networked server 1102 of FIG. 11, and further includes a trusted module 1204. In some embodiments, the trusted module 1204 takes the form of or at least includes a TEE. In some embodiments, the trusted module 1204 takes the form of or at least includes a trusted data-mining sandbox. The trusted module 1204 may include any combination of (i) hardware (e.g., an FPGA) and (ii) software or firmware deemed suitable by those of skill in the relevant art for a carrying out one or more of the functions described herein.

### 5. Additional Embodiments

### a. Introduction

This section lists a number of embodiments in addition to those discussed above. The next subsection lists a number of additional embodiments that pertain to peer-oriented privacy protection, while the subsequent subsection lists a number of additional embodiments that pertain to peer data comparison.

In one example of an embodiment that pertains to peer-oriented-privacy protection, a user agent receives, from a requesting party, a request for user data. Based on data that is associated with a first user, the user agent prepares a first candidate response to the request for user data. The user agent requests additional candidate responses from other user agents associated with other users. Based on the additional responses received from other user agents, the user agent determines the privacy level of the first candidate response. The privacy level may be based on the uniqueness of the first candidate response relative to the additional candidate responses. The user agent sends a confidential response to the requesting party only if the privacy level of the candidate response exceeds a threshold.

Various different embodiments that pertain to peer data comparison enable the sharing of information among users in, e.g., similar living situations. Such information may include information regarding personal data, such as household expenses. In one example embodiment, a matching service collects personal background information, such as household parameters, associated with a plurality of users. The service receives a search request from a first user and identifies one or more matching users with similar personal background. The service sends requests to the matching users, requesting that they provide information regarding personal data such as household expenses. User agents acting on behalf of the matching users automatically collect personal data information and send that information in response to the requests. These responses may be sent to the matching service or directly to the requesting user. The matching service and user agents may be implemented in TEEs.

### b. Peer-Oriented Privacy Protection (POPP)

### i. First Additional POPP Embodiment

The first additional POPP embodiment takes the form of a method that includes (i) receiving, from a requesting party, a request for user data; (ii) preparing a first candidate response to the request for user data, where the first candidate response is based at least in part on data that is associated with a first user; (iii) determining a privacy level of the first candidate response, where the privacy level is based at least in part on a number of additional candidate responses that are based on data that is associated with additional users; and (iv) sending the first candidate response to the requesting party only after determining that the privacy level exceeds a privacy threshold.

In at least one embodiment, the request for user data includes computer-executable instructions.

In at least one embodiment, the method is performed in a TEE.

In at least one embodiment, the method is performed in a TEE that is associated with a single user.

### ii. Second Additional POPP Embodiment

The second additional POPP embodiment takes the form of a method that includes (i) receiving, from a requesting party, a request for user data; (ii) preparing a first candidate response to the request for user data, where the first candidate response is based at least in part on data that is associated with a first user; (iii) determining a privacy level of the first candidate response, where the privacy level is based at least in part on a number of received additional candidate responses that are based on data that is associated with additional users; and (iv) sending a confidential response to the requesting party only after determining that the privacy level exceeds a privacy threshold, where the confidential response is based at least in part on the first candidate response.

In at least one embodiment, the confidential response is based at least in part on the additional candidate responses.

In at least one embodiment, the confidential response is based at least in part on a statistical combination of the first candidate response and the additional candidate responses.

In at least one embodiment, the request for user data includes computer-executable instructions.

In at least one embodiment, the method is performed in a TEE.

In at least one embodiment, the method is performed in a TEE that is associated with a single user.

### iii. Third Additional POPP Embodiment

The third additional POPP embodiment takes the form of a method that includes (i) receiving, from a requesting party, a request for user data; (ii) preparing a first candidate response to the request for user data, where the first candidate response is based at least in part on data that is associated with a first user; (iii) sending, to a plurality of user agents associated with additional users, a request for additional candidate responses; (iv) determining a privacy level of the first candidate response based at least in part on additional candidate responses received from the user agents; and (v) sending the first candidate response to the requesting party only after determining that the privacy level exceeds a privacy threshold.

In at least one embodiment, the request for additional candidate responses is based on the request for user data.

In at least one embodiment, the request for additional candidate responses includes the request for user data.

In at least one embodiment, the privacy level is based at least in part on the number of additional candidate responses received.

In at least one embodiment, the privacy level is based at least in part on a percentage of additional candidate responses received that are similar to the first candidate response.

In at least one embodiment, the request for user data includes computer-executable instructions.

In at least one embodiment, the method is performed in a TEE.

In at least one embodiment, the method is performed in a TEE that is associated with a single user.

### iv. Fourth Additional POPP Embodiment

The fourth additional POPP embodiment takes the form of a method that includes (i) receiving, from a requesting party, a request for user data; (ii) preparing a first candidate response to the request for user data, where the first candidate response is based at least in part on data that is associated with a first user; (iii) receiving a number of additional candidate responses that are based on data that is associated with additional users; and (iv) sending the first candidate response to the requesting party only after determining that the number of additional candidate responses exceeds a threshold.

In at least one embodiment, the method also includes sending, to a plurality of user agents associated with additional users, a request for additional candidate responses, where the request for additional candidate responses is based at least in part on the request for user data.

In at least one embodiment, the method also includes sending, to a plurality of user agents associated with additional users, a request for additional candidate responses, where the request for additional candidate responses includes the request for user data.

In at least one embodiment, the request for user data includes computer-executable instructions.

In at least one embodiment, the method is performed in a TEE.

In at least one embodiment, the method is performed in a TEE that is associated with a single user.

### v. Fifth Additional POPP Embodiment

The fifth additional POPP embodiment takes the form of a method that includes (i) receiving, from a requesting party, a request for user data; (ii) preparing a first candidate response to the request for user data, where the first candidate response is based at least in part on data that is associated with a first user; (iii) receiving a number of additional candidate responses that are based on data that is associated with additional users; and (iv) sending a confidential response to the requesting party only after determining that the number of additional candidate responses exceeds a threshold, where the confidential response is based on the first candidate response.

In at least one embodiment, the method also includes sending, to a plurality of user agents associated with additional users, a request for additional candidate responses, where the request for additional candidate responses is based at least in part on the request for user data.

In at least one embodiment, the method also includes sending, to a plurality of user agents associated with additional users, a request for additional candidate responses, where the request for additional candidate responses includes the request for user data.

In at least one embodiment, the request for user data includes computer-executable instructions.

In at least one embodiment, the method is performed in a TEE.

In at least one embodiment, the method is performed in a TEE that is associated with a single user.

### vi. Sixth Additional POPP Embodiment

The sixth additional POPP embodiment takes the form of a method that includes (i) receiving, from a requesting party, a request for user data; (ii) preparing a first candidate response to the request for user data, where the first candidate response is based at least in part on data that is associated with a first user; (iii) receiving a total number of additional candidate responses that are based on data that is associated with additional users; (iv) comparing the additional candidate responses with the first candidate response to determine a number of similar candidate responses that are similar to the first candidate response; (v) determining, based on at least one of (a) the total number of additional candidate responses and (b) the number of similar candidate responses, whether to send a confidential response; and (vi) only after making a sending determination to send the confidential response, sending the confidential response to the requesting party, where the confidential response is based at least in part on the first candidate response.

In at least one embodiment, the sending determination is made based at least in part on whether the total number of additional candidate responses exceeds a threshold.

In at least one embodiment, the sending determination is made based at least in part on whether the number of similar candidate responses exceeds a threshold.

In at least one embodiment, the sending determination is made based at least in part on whether the percentage of similar candidate responses relative to the total number of additional candidate responses exceeds a threshold.

In at least one embodiment, the confidential response includes the first candidate response.

In at least one embodiment, the confidential response includes statistical information based on the first candidate response and the additional candidate responses.

In at least one embodiment, the method also includes sending, to a plurality of user agents associated with additional users, a request for additional candidate responses, where the request for additional candidate responses is based at least in part on the request for user data.

In at least one embodiment, the method also includes sending, to a plurality of user agents associated with additional users, a request for additional candidate responses, where the request for additional candidate responses includes the request for user data.

In at least one embodiment, the request for user data includes computer-executable instructions.

In at least one embodiment, the method is performed in a TEE.

In at least one embodiment, the method is performed in a TEE that is associated with a single user.

### vii. Seventh Additional POPP Embodiment

The seventh additional POPP embodiment takes the form of a method that includes (i) receiving, from a requesting party, a first request for user data; (ii) preparing a first candidate response to the request for user data, where the first candidate response is based at least in part on data that is associated with a first user; (iii) determining a privacy level of the first candidate response, where the privacy level is based at least in part on a number of received additional candidate responses that are based on data that is associated with additional users; and (iv) after determining that the privacy level does not exceed a privacy threshold, negotiating a second request for user data.

In at least one embodiment, the method also includes sending, to a plurality of user agents associated with additional users, a request for additional candidate responses, where the request for additional candidate responses is based at least in part on the request for user data.

In at least one embodiment, the method also includes sending, to a plurality of user agents associated with additional users, a request for additional candidate responses, where the request for additional candidate responses includes the request for user data.

In at least one embodiment, the request for user data includes computer-executable instructions.

In at least one embodiment, the method is performed in a TEE.

In at least one embodiment, the method is performed in a TEE that is associated with a single user.

In at least one embodiment, the method also includes (i) preparing a second candidate response to the second request for user data, where the second candidate response is based at least in part on data that is associated with the first user; (ii) determining a privacy level of the second candidate response, where the privacy level of the second candidate response is based at least in part on a number of received additional candidate responses that are based on data that is associated with additional users; and (iii) sending a confidential response to the requesting party only after determining that the privacy level exceeds a privacy threshold, where the confidential response is based at least in part on the second candidate response.

### viii. Eighth Additional POPP Embodiment

The eighth additional POPP embodiment takes the form of a method that includes (i) receiving, at a secure data broker, a request for user data from a requesting party; (ii) providing the request for user data to a plurality of user agents; (iii) collecting a plurality of candidate responses from user agents, where the candidate responses are based at least in part on data that is associated with users that are associated with the respective user agents; (iv) determining a privacy level for each of the plurality of candidate responses, where the privacy level is based at least in part on the other candidate responses; and (v) sending, to the requesting party, only those candidate responses having a privacy level above a threshold.

In at least one embodiment, the request for user data includes computer-executable instructions.

In at least one embodiment, the method is performed in a TEE.

### ix. Ninth Additional POPP Embodiment

The ninth additional POPP embodiment takes the form of a method that includes (i) receiving a request for user data from a data broker, where the request for user data is associated with a requesting party; (ii) providing a first candidate response to the data broker, where the candidate response is based at least in part on data that is associated with a first user; (iii) determining a privacy level for the candidate response, where the privacy level is based at least in part on information received from the data broker; and (iv) only after determining that the privacy level for the candidate response exceeds a threshold, sending a confidential response to the requesting party, where the confidential response is based on the candidate response.

In at least one embodiment, the information received from the data broker includes additional candidate responses that are associated with other users.

In at least one embodiment, the privacy level is based at least in part on the uniqueness of the candidate response.

In at least one embodiment, the request for user data includes computer-executable instructions.

In at least one embodiment, the method is performed in a TEE.

### x. Tenth Additional POPP Embodiment

The tenth additional POPP embodiment takes the form of a user agent that includes at least one processor, a network interface, and a non-transitory computer-readable memory, where the memory stores instructions that are operative, when executed by the at least one processor, to (i) receive, from a requesting party, a request for user data; (ii) prepare a first candidate response to the request for user data, where the first candidate response is based at least in part on data that is associated with a first user; (iii) determine a privacy level of the first candidate response, where the privacy level is based at least in part on a number of additional candidate responses that are based on data that is associated with additional users; and (iv) send the first candidate response to the requesting party only after determining that the privacy level exceeds a privacy threshold.

### xi. Eleventh Additional POPP Embodiment

The eleventh additional POPP embodiment takes the form of a user agent that includes at least one processor, a network interface, and a non-transitory computer-readable memory, where the memory stores instructions that are operative, when executed by the at least one processor, to (i) receive, from a requesting party, a request for user data; (ii) prepare a first candidate response to the request for user data, where the first candidate response is based at least in part on data that is associated with a first user; (iii) determine a privacy level of the first candidate response, where the privacy level is based at least in part on a number of received additional candidate responses that are based on data that is associated with additional users; and (iv) send a confidential response to the requesting party only after determining that the privacy level exceeds a privacy threshold, where the confidential response is based at least in part on the first candidate response.

### xii. Twelfth Additional POPP Embodiment

The twelfth additional POPP embodiment takes the form of a user agent that includes at least one processor, a network interface, and a non-transitory computer-readable memory, where the memory stores instructions that are operative, when executed by the at least one processor, to (i) receive, from a requesting party, a request for user data; (ii) prepare a first candidate response to the request for user data, where the first candidate response is based at least in part on data that is associated with a first user; (iii) send, to a plurality of user agents associated with additional users, a request for additional candidate responses; (iv) determine a privacy level of the first candidate response based at least in part on additional candidate responses received from the user agents; and (v) send the first candidate response to the requesting party only after determining that the privacy level exceeds a privacy threshold.

### xiii. Thirteenth Additional POPP Embodiment

The thirteenth additional POPP embodiment takes the form of a user agent that includes at least one processor, a network interface, and a non-transitory computer-readable memory, where the memory stores instructions that are operative, when executed by the at least one processor, to (i) receive, from a requesting party, a request for user data; (ii) prepare a first candidate response to the request for user data, where the first candidate response is based at least in part on data that is associated with a first user; (iii) receive a number of additional candidate responses that are based on data that is associated with additional users; and (iv) send the first candidate response to the requesting party only after determining that the number of additional candidate responses exceeds a threshold.

### xiv. Fourteenth Additional POPP Embodiment

The fourteenth additional POPP embodiment takes the form of a user agent that includes at least one processor, a network interface, and a non-transitory computer-readable memory, where the memory stores instructions that are operative, when executed by the at least one processor, to (i) receive, from a requesting party, a request for user data; (ii) prepare a first candidate response to the request for user data, where the first candidate response is based at least in part on data that is associated with a first user; (iii) receive a number of additional candidate responses that are based on data that is associated with additional users; and (iv) send a confidential response to the requesting party only after determining that the number of additional candidate responses exceeds a threshold, where the confidential response is based on the first candidate response.

### xv. Fifteenth Additional POPP Embodiment

The fifteenth additional POPP embodiment takes the form of a user agent that includes at least one processor, a network interface, and a non-transitory computer-readable memory, where the memory stores instructions that are operative, when executed by the at least one processor, to (i) receive, from a requesting party, a request for user data; (ii) prepare a first candidate response to the request for user data, where the first candidate response is based at least in part on data that is associated with a first user; (iii) receive a total number of additional candidate responses that are based on data that is associated with additional users; (iv) compare the additional candidate responses with the first candidate response to determine a number of similar candidate responses that are similar to the first candidate response; (v) determine, based on at least one of (a) the total number of additional candidate responses and (b) the number of similar candidate responses, whether to send a confidential response; and (vi) only after making a determination to send the confidential response, send the confidential response to the requesting party, where the confidential response is based at least in part on the first candidate response.

### xvi. Sixteenth Additional POPP Embodiment

The sixteenth additional POPP embodiment takes the form of a user agent that includes at least one processor, a network interface, and a non-transitory computer-readable memory, where the memory stores instructions that are operative, when executed by the at least one processor, to (i) receive, from a requesting party, a first request for user data; (ii) prepare a first candidate response to the request for user data, where the first candidate response is based at least in part on data that is associated with a first user; (iii) determine a privacy level of the first candidate response, where the privacy level is based at least in part on a number of received additional candidate responses that are based on data that is associated with additional users; and (iv) after determining that the privacy level does not exceed a privacy threshold, negotiate a second request for user data.

### xvii. Seventeenth Additional POPP Embodiment

The seventeenth additional POPP embodiment takes the form of a secure data broker that includes at least one processor, a network interface, and a non-transitory computer-readable memory, where the memory stores instructions that are operative, when executed by the at least one processor, to (i) receive a request for user data from a requesting party; (ii) provide the request for user data to a plurality of user agents; (iii) collect a plurality of candidate responses from user agents, where the candidate responses are based at least in part on data that is associated with users that are associated with the respective user agents; (iv) determine a privacy level for each of the plurality of candidate responses, where the privacy level is based at least in part on the other candidate responses; and (v) send, to the requesting party, only those candidate responses having a privacy level above a threshold.

### xviii. Eighteenth Additional POPP Embodiment

The eighteenth additional POPP embodiment takes the form of a user agent that includes at least one processor, a network interface, and a non-transitory computer-readable memory, where the memory stores instructions that are operative, when executed by the at least one processor, to (i) receive a request for user data from a data broker, where the request for user data is associated with a requesting party; (ii) provide a first candidate response to the data broker, where the candidate response is based at least in part on data that is associated with a first user; (iii) determine a privacy level for the candidate response, where the privacy level is based at least in part on information received from the data broker; and (iv) only after determining that the privacy level for the candidate response exceeds a threshold, send a confidential response to the requesting party, where the confidential response is based on the candidate response.

### xix. Nineteenth Additional POPP Embodiment

The nineteenth additional POPP embodiment takes the form of a user agent that includes (i) a network interface operative to receive, from a requesting party, a request for user data; (ii) a candidate-response module operative to prepare a first candidate response to the request for user data, where the first candidate response is based at least in part on data that is associated with a first user; and (iii) a privacy module operative to determine a privacy level of the first candidate response, where the privacy level is based at least in part on a number of received additional candidate responses that are based on data that is associated with additional users; and (iv) a confidential response module operative to send a confidential response to the requesting party only after determining that the privacy level exceeds a privacy threshold, wherein the confidential response is based at least in part on the first candidate response.

### c. Peer Data Comparison (PDC)

### i. First Additional PDC Embodiment

The first additional PDC embodiment takes the form of a method that includes (i) receiving personal background associated with a plurality of users including a first user; (ii) receiving a search request from the first user; (iii) in response to the search request, identifying at least one matching user based on said personal background; and (iv) sending, to the at least one matching user, a request for information regarding personal data that is associated with the matching user.

In at least one embodiment, the method also includes (i) receiving, from the at least one matching user, information regarding personal data that is associated with the matching user and (ii) sending, to the first user, the information regarding personal data that is associated with the matching user. In at least one such embodiment, the method also includes deleting the information regarding personal data after sending the information to the matching user. In at least one such embodiment, the information regarding personal data is sent anonymously.

In at least one embodiment, the information regarding personal data is received in encrypted form.

In at least one embodiment, the method is implemented in a TEE.

### ii. Second Additional PDC Embodiment

The second additional PDC embodiment takes the form of a method that is performed by a first user agent that is associated with a first user. The method includes (i) obtaining, from a second user agent, search criteria including personal background associated with a second user; (ii) determining whether the personal background associated with the second user matches personal background associated with the first user; (iii) in response to a determination that the personal background associated with the second user does match the personal background associated with the first user, sending, to the second user agent, information regarding personal data of the first user.

In at least one embodiment, the information regarding personal data is sent anonymously.

In at least one embodiment, the method also includes determining whether the search criteria comply with predefined rules for information sharing, and the sending of information includes sending only information that complies with the predefined rules.

In at least one embodiment, the information regarding personal data is sent in an encrypted form.

In at least one embodiment, the method also includes automatically collecting the information on personal data that is associated with the first user.

In at least one embodiment, the first user agent is implemented in a TEE.

### iii. Third Additional PDC Embodiment

The third additional PDC embodiment takes the form of a method that is performed by a first user agent that is associated with a first user. The method includes (i) providing, to a matching service, personal background associated with the first user; (ii) receiving, from the matching service, a request for information regarding personal data, where the request for information is associated with a second user agent; and (iii) in response to the request for information, sending, to the second user agent, information regarding personal data that is associated with the first user.

In at least one embodiment, the method also includes, in response to the request for information, determining whether the request complies with predefined rules for information sharing, and the sending of information includes providing only information that complies with the predefined rules.

In at least one embodiment, the first user agent is implemented in a TEE.

In at least one embodiment, the information regarding personal data is sent in an encrypted form.

In at least one embodiment, the information regarding personal data is sent anonymously.

### iv. Fourth Additional PDC Embodiment

The fourth additional PDC embodiment takes the form of a matching-service system that includes a network interface; a processor; and a non-transitory computer-readable medium storing personal background associated with a plurality of users including a first user, where the non-transitory computer-readable medium further stores instructions that are operative, when executed on the processor, to (i) receive a search request from the first user; (ii) in response to the search request, identify at least one matching user based on said personal background; and (iii) send, to the at least one matching user, a request for information regarding personal data that is associated with the matching user.

In at least one embodiment, the instructions are further operative to (i) receive, from the at least one matching user, information regarding personal data that is associated with the matching user and (ii) send, to the first user, the information regarding personal data that is associated with the matching user.

In at least one embodiment, the system is implemented in a TEE.

### v. Fifth Additional PDC Embodiment

The fifth additional PDC embodiment takes the form of a user-agent system that includes a network interface; a processor; and a non-transitory computer-readable medium storing personal background associated with a first user, where the non-transitory computer-readable medium also stores instructions that are operative, when executed on the processor, to (i) obtain, from a second user agent, search criteria including personal background associated with a second user; (ii) determine whether the personal data that is associated with the second user matches personal background associated with the first user; (iii) in response to a determination that the personal background associated with the second user does match the personal background associated with the first user, send, to the second user agent, information regarding personal data of the first user.

In at least one embodiment, the computer-readable medium further stores predefined rules for information sharing, and the instructions are further operative to send, to the second user agent, only information that complies with the predefined rules for information sharing.

In at least one embodiment, the system is implemented in a TEE.

### vi. Sixth Additional PDC Embodiment

The sixth additional PDC embodiment takes the form of a user-agent system that includes a network interface; a processor; and a non-transitory computer-readable medium that stores instructions that are operative, when executed on the processor, to (i) provide, to a matching service, personal data that is associated with a first user; (ii) receive, from the matching service, a request for information regarding personal data, where the request for information is associated with a second user agent; and (iii) in response to the request for information, send, to the second user agent, information on personal data that is associated with the first user.

In at least one embodiment, the non-transitory computer-readable medium further stores predefined rules for information sharing, and the instructions are further operative, in response to the request for information, to determine whether the request complies with the predefined rules for information sharing.

In at least one embodiment, the system is implemented in a TEE.

### vii. Seventh Additional PDC Embodiment

The seventh additional PDC embodiment takes the form of a method that is performed by a matching service. The method includes (i) receiving household parameters associated with a plurality of users including a first user; (ii) receiving a search request from the first user; (iii) in response to the search request, identifying at least one matching user based on the household parameters; and (iv) sending, to the at least one matching user, a request for information regarding household expenses associated with the matching user.

In at least one embodiment, the method also includes (i) receiving, from the at least one matching user, information regarding household expenses associated with the matching user and (ii) sending, to the first user, the information regarding household expenses associated with the matching user. In at least one such embodiment, the method also includes deleting the information regarding household expenses after sending the information to the matching user. In at least one such embodiment, the information regarding household expenses is sent anonymously.

In at least one embodiment, a plurality of matching users are identified, and the method includes (i) receiving, from the plurality of matching users, information regarding household expenses associated with the matching users and (ii) identifying one or more matching users having low expenses in at least one household expense category, where the sending of information regarding household expenses includes sending information regarding the one or more matching users having low expenses in at least one household expense category. In at least one such embodiment, the method also includes deleting the information regarding household expenses after sending the information to the matching user. In at least one such embodiment, the information regarding household expenses is sent anonymously.

In at least one embodiment, the method also includes (i) receiving, from the first user, an inquiry regarding expense reduction and (ii) forwarding, to the at least one matching user, the inquiry regarding expense reduction.

In at least one embodiment, the method also includes (i) receiving, from the first user, an inquiry regarding expense reduction; (ii) forwarding, to the at least one matching user, the inquiry regarding expense reduction; (iii) receiving, from the at least one matching user, a response to the inquiry; and (iv) forwarding the response to the first user.

In at least one embodiment, the method also includes receiving, from the at least one matching user, information regarding household expenses associated with the matching user. In at least one such embodiment, the information regarding household expenses is received in encrypted form.

In at least one embodiment, one or more of the household parameters are selected from the group consisting of dwelling location, dwelling type, number of rooms, dwelling size, types of appliances, household-monitoring data, number of occupants, age of occupants, and gender of occupants.

In at least one embodiment, one or more of the household parameters are selected from the group consisting of information on pets, time spent at home, status as homemaker, work-from-home status, and living patterns.

In at least one embodiment, one or more of the household expenses are selected from the group consisting of electric expenses, gas expenses, water expenses, sewer expenses, heating expenses, refuse-collection expenses, waste-management expenses, energy expenses, and rent expenses.

In at least one embodiment, one or more of the household expenses are selected from the group consisting of insurance expenses, loan expenses, maintenance fees, and taxes.

In at least one embodiment, the method also includes automatically collecting the information on household expenses associated with the first user.

In at least one embodiment, the method also includes automatically collecting the information on household expenses associated with the first user from an account of the first user.

In at least one embodiment, the method also includes automatically collecting the information on household expenses associated with the first user from an account of the first user, where the account is selected from the group consisting of a bank account, a credit-card account, and a utilities account.

In at least one embodiment, the matching service is implemented in a TEE.

### viii. Eighth Additional PDC Embodiment

The eighth additional PDC embodiment takes the form of a method that is performed by a first user agent associated with a first user. The method includes (i) obtaining, from a second user agent, search criteria including household parameters associated with a second user; (ii) determining whether the household parameters associated with the second user match household parameters associated with the first user; and (iii) in response to making a determination that the household parameters associated with the second user do match the household parameters associated with the first user, sending, to the second user agent, information regarding household expenses of the first user.

In at least one embodiment, the information regarding household expenses is sent anonymously.

In at least one embodiment, the method also includes determining whether the search criteria comply with predefined rules for information sharing, and the sending of information includes sending only information that complies with the predefined rules.

In at least one embodiment, the information regarding household expenses is sent in an encrypted form.

In at least one embodiment, the household parameters are selected from the group consisting of dwelling location, dwelling type, number of rooms, dwelling size, types of appliances, household-monitoring data, number of occupants, age of occupants, and gender of occupants.

In at least one embodiment, the household expenses are selected from the group consisting of electric expenses, gas expenses, water expenses, sewer expenses, heating expenses, refuse-collection expenses, waste-management expenses, energy expenses, and rent expenses.

In at least one embodiment, the method also includes (i) receiving, from the second user agent, a first inquiry regarding expense reduction; (ii) sending, to the second user agent, a response to the first inquiry regarding expense reduction; (iii) storing the response; (iv) receiving, from a third user agent, a second inquiry regarding expense reduction; and (v) in response to the third inquiry, sending the stored response to the third user agent.

In at least one embodiment, the method also includes automatically collecting the information on household expenses associated with the first user.

In at least one embodiment, the method also includes automatically collecting the information on household expenses associated with the first user from an account of the first user.

In at least one embodiment, the method also includes automatically collecting the information on household expenses associated with the first user from an account of the first user, where the account is selected from the group consisting of a bank account, a credit-card account, and a utilities account.

In at least one embodiment, the first user agent is implemented in a TEE.

### ix. Ninth Additional PDC Embodiment

The ninth additional PDC embodiment takes the form of a method that is performed by a first user agent associated with a first user. The method includes (i) providing, to a matching service, household parameters associated with the first user; (ii) receiving, from the matching service, a request for information regarding household expenses, where the request for information is associated with a second user agent; and (iii) in response to the request for information, sending, to the second user agent, information on household expenses associated with the first user.

In at least one embodiment, the method also includes, in response to the request for information, determining whether the request complies with predefined rules for information sharing, where the sending of information includes providing only information that complies with the predefined rules.

In at least one embodiment, the household parameters are selected from the group consisting of dwelling location, dwelling type, number of rooms, dwelling size, types of appliances, household-monitoring data, number of occupants, age of occupants, and gender of occupants.

In at least one embodiment, the household expenses are selected from the group consisting of electric expenses, gas expenses, water expenses, sewer expenses, heating expenses, refuse-collection expenses, waste-management expenses, energy expenses, and rent expenses.

In at least one embodiment, the method also includes (i) receiving, from the matching service, a first inquiry regarding expense reduction; (ii) sending, to the matching service, a response to the first inquiry regarding expense reduction; (iii) storing the response; (iv) receiving, from the matching service, a second inquiry regarding expense reduction; and (v) in response to the second inquiry, sending the stored response to the matching service.

In at least one embodiment, the method also includes automatically collecting the information on household expenses associated with the first user.

In at least one embodiment, the method also includes automatically collecting the information on household expenses associated with the first user from an account of the first user.

In at least one embodiment, the method also includes automatically collecting the information on household expenses associated with the first user from an account of the first user, where the account is selected from the group consisting of a bank account, a credit-card account, and a utilities account.

In at least one embodiment, the first user agent is implemented in a TEE.

In at least one embodiment, the information regarding household expenses is sent in an encrypted form.

In at least one embodiment, the information regarding household expenses is sent anonymously.

### x. Tenth Additional PDC Embodiment

The tenth additional PDC embodiment takes the form of a matching-service system that includes a network interface; a processor; and a non-transitory computer-readable medium storing household parameters associated with a plurality of users including a first user, where the non-transitory computer-readable medium further stores instructions that are operative, when executed on the processor, to (i) receive a search request from the first user; (ii) in response to the search request, identify at least one matching user based on the household parameters; and (iii) send, to the at least one matching user, a request for information regarding household expenses associated with the matching user.

In at least one embodiment, the instructions are further operative to (i) receive, from the at least one matching user, information regarding household expenses associated with the matching user and (ii) send, to the first user, the information regarding household expenses associated with the matching user.

In at least one embodiment, the instructions are further operative to (i) receive, from a plurality of matching users, information regarding household expenses associated with the matching users; (ii) identify one or more matching users having low expenses in at least one household expense category; and (iii) send to the first user information regarding the one or more matching users having low expenses in at least one household expense category.

In at least one embodiment, the system is implemented in a TEE.

### xi. Eleventh Additional PDC Embodiment

The eleventh additional PDC embodiment takes the form of a user-agent system that includes a network interface; a processor; and a non-transitory computer-readable medium storing household parameters associated with a first user, where the non-transitory computer-readable medium further stores instructions that are operative, when executed on the processor, to (i) obtain, from a second user agent, search criteria including household parameters associated with a second user; (ii) determine whether the household parameters associated with the second user match household parameters associated with the first user; and (iii) in response to a determination that the household parameters associated with the second user match the household parameters associated with the first user, send, to the second user agent, information regarding household expenses of the first user.

In at least one embodiment, the computer-readable medium further stores predefined rules for information sharing, and the instructions are further operative to send, to the second user agent, only information that complies with the predefined rules for information sharing.

In at least one embodiment, the system is implemented in a TEE.

### xii. Twelfth Additional PDC Embodiment

The twelfth additional PDC embodiment takes the form of a user-agent system that includes a network interface; a processor; and a non-transitory computer-readable medium that stores instructions that are operative, when executed on the processor, to (i) provide, to a matching service, household parameters associated with a first user; (ii) receive, from the matching service, a request for information regarding household expenses, where the request for information is associated with a second user agent; and (iii) in response to the request for information, send, to the second user agent, information on household expenses associated with the first user.

In at least one embodiment, the non-transitory computer-readable medium further stores predefined rules for information sharing, and the instructions are further operative, in response to the request for information, to determine whether the request complies with predefined rules for information sharing.

In at least one embodiment, the system is implemented in a TEE.

### 6. Conclusion

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read-only memory (ROM), a random-access memory (RAM), a register, cache memory, semiconductor memory devices, magnetic media such as internal hard disks and removable disks, magnetooptical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A computer-implemented method comprising:
obtaining a user-data request that is associated with a requesting party;
enhancing user privacy and anonymity by making a random determination as to whether or not to skip the user-data request;
if the random determination is to skip the user-data request, then skipping the user-data request;
if the random determination is to not skip the user-data request, then:
preparing a first candidate response to the user-data request, the first candidate response being based at least in part on data that is associated with a first user;
receiving a plurality of additional candidate responses that are respectively based on data that is respectively associated with a plurality of additional users;
determining a privacy level of the first candidate response based at least in part on the received plurality of additional candidate responses; and
determining that the privacy level exceeds a privacy threshold, and responsively sending, to the requesting party, a user-data response associated with the user-data request.

2. The method of claim 1, wherein the user-data request includes computer-executable instructions.

3. The method of claim 1, performed in a trusted execution environment (TEE).

4. The method of claim 3, wherein the TEE is associated with a single user and is not associated with any of the additional users in the plurality of additional users.

5. The method of claim 1, performed in a data-broker device.

6. The method of claim 1, performed in a data-aggregation device.

7. The method of claim 1, wherein the user-data response is based at least in part on the first candidate response and at least in part on the received plurality of additional candidate responses.

8. The method of claim 1, wherein the user-data response is based at least in part on a statistical combination of the first candidate response and the received plurality of additional candidate responses.

9. The method of claim 1, wherein the user-data response consists of the first candidate response.

10. The method of claim 1, wherein determining the privacy level of the first candidate response based at least in part on the received plurality of additional candidate responses comprises determining the privacy level of the first candidate response based at least in part on a total number of additional candidate responses in the plurality of additional candidate responses.

11. The method of claim 1, further comprising:
determining a similar number of additional candidate responses in the plurality of additional candidate responses that are similar to the first candidate response,
wherein determining the privacy level of the first candidate response based at least in part on the received plurality of additional candidate responses comprises determining the privacy level of the first candidate response based at least in part on the similar number of additional candidate responses.

12. The method of claim 1, further comprising:
requesting the additional candidate responses based on the user-data request; and
receiving the additional candidate responses in the plurality of additional candidate responses from respective trusted execution environments (TEEs).

13. The method of claim 12, wherein requesting the additional candidate responses comprises sending respective additional-candidate-response requests to the respective TEEs.

14. The method of claim 13, wherein each additional-candidate-response request comprises the user-data request.

15. A computing system comprising:
a communication interface;
a processor; and
data storage containing instructions executable by the processor for causing the computing system to carry out a set of functions, the set of functions including:
obtaining a user-data request that is associated with a requesting party;
enhancing user privacy and anonymity by_making a random determination as to whether or not to skip the user-data request;
if the random determination is to skip the user-data request, then skipping the user-data request;
if the random determination is to not skip the user-data request, then:
preparing a first candidate response to the user-data request, the first candidate response being based at least in part on data that is associated with a first user;
receiving a plurality of additional candidate responses that are respectively based on data that is respectively associated with a plurality of additional users;
determining a privacy level of the first candidate response based at least in part on the received plurality of additional candidate responses; and
determining that the privacy level exceeds a privacy threshold, and responsively sending, to the requesting party, a user-data response associated with the user-data request.

## Patentansprüche

1. Computerumgesetztes Verfahren, umfassend:
Beschaffung einer Benutzerdatenanfrage die mit einer anfragenden Partei assoziiert ist;
Verbesserung der Benutzerprivatsphäre und Anonymität durch Durchführung einer Zufallsbestimmung, ob die Benutzerdatenanfrage übersprungen werden soll oder nicht;
wenn die Zufallsbestimmung angibt, dass die Benutzerdatenanfrage übersprungen werden soll, Überspringen der Benutzerdatenanfrage;
wenn die Zufallsbestimmung angibt, dass die Benutzerdatenanfrage nicht übersprungen werden soll:
Vorbereitung einer ersten Kandidatenantwort auf die Benutzerdatenanfrage, wobei die erste Kandidatenantwort mindestens teilweise auf Daten basiert, die mit einem ersten Nutzer assoziiert sind;
Empfang mehrerer weiterer Kandidatenantworten, die jeweils auf Daten basieren, die jeweils mit mehreren weiteren Benutzern assoziiert sind;
Bestimmung der Privatsphärenstufe einer ersten Kandidatenantwort basierend mindestens teilweise auf den empfangenen mehreren weiteren Kandidatenantworten; und
Bestimmung, dass die Privatsphärenstufe eine Privatsphärengrenze übersteigt, und in Reaktion darauf Senden einer Benutzerdatenantwort, die mit der Benutzerdatenanfrage assoziiert ist, an die anfragende Partei.

2. Verfahren nach Anspruch 1, wobei die Benutzerdatenanfrage computerausführbare Anweisungen enthält.

3. Verfahren nach Anspruch 1, durchgeführt in einer vertrauenswürdigen Ausführungsumgebung (TEE).

4. Verfahren nach Anspruch 3, wobei die TEE mit einem einzelnen Benutzer assoziiert ist und nicht mit einem der weiteren Benutzer der mehreren zusätzlichen Benutzer assoziiert ist.

5. Verfahren nach Anspruch 1, durchgeführt in einer Datenmaklervorrichtung.

6. Verfahren nach Anspruch 1, durchgeführt in einer Datenaggregationsvorrichtung .

7. Verfahren nach Anspruch 1, wobei die Benutzerdatenantwort mindestens teilweise auf der ersten Kandidatenantwort und mindestens teilweise auf den empfangen mehreren weiteren Kandidatenantworten basiert.

8. Verfahren nach Anspruch 1, wobei die Benutzerdatenantwort mindestens teilweise auf einer statistischen Kombination aus der ersten Kandidatenantwort und den empfangen mehreren weiteren Kandidatenantworten basiert.

9. Verfahren nach Anspruch 1, wobei die Benutzerdatenantwort aus der ersten Kandidatenantwort besteht.

10. Verfahren nach Anspruch 1, wobei die Bestimmung der Privatsphärenstufe der ersten Kandidatenantwort mindestens teilweise auf Grundlage der empfangenen mehreren weiteren Kandidatenantworten die Bestimmung der Privatsphärenstufe der ersten Kandidatenantwort basierend mindestens teilweise auf einer Gesamtanzahl weiterer Kandidatenantworten in mehreren weiteren Kandidatenantworten basiert.

11. Verfahren aus Anspruch 1, ferner umfassend:
Bestimmung einer ähnlichen Anzahl weiterer Kandidatenantworten in den mehreren weiteren Kandidatenantworten, die der ersten Kandidatenantwort ähneln,
wobei die Bestimmung der Privatsphärenstufe der ersten Kandidatenantwort mindestens teilweise auf Grundlage der empfangenen mehreren weiteren Kandidatenantworten die Bestimmung der Privatsphärenstufe der ersten Kandidatenantwort basierend mindestens teilweise auf der ähnlichen Anzahl weiterer Kandidatenantworten basiert.

12. Verfahren aus Anspruch 1, ferner umfassend:
Anforderung der weiteren Kandidatenantworten basierend auf der Benutzerdatenanfrage; und Empfang der weiteren Kandidatenantworten in den mehreren weiteren Kandidatenantworten von jeweiligen vertrauenswürdigen Ausführungsumgebungen (TEEs).

13. Verfahren nach Anspruch 12, wobei die Anforderung der weiteren Kandidatenantworten das Senden jeweiliger weiter Kandidatenantwortanfragen an die jeweiligen TEEs umfasst.

14. Verfahren nach Anspruch 13, wobei jede weitere Kandidatenantwortanfrage die Benutzerdatenanfrage umfasst.

15. Rechnersystem umfassend:
eine Kommunikationsschnittstelle;
einen Prozessor; und
einen Datenspeicher, der Anweisungen enthält, die durch den Prozessor ausführbar sind, um das Rechnersystem, zu veranlassen, einen Satz Funktionen auszuführen, einschließlich:
Beschaffung einer Benutzerdatenanfrage die mit einer anfragenden Partei assoziiert ist;
Verbesserung der Benutzerprivatsphäre und Anonymität durch Durchführung einer Zufallsbestimmung, ob die Benutzerdatenanfrage übersprungen werden soll oder nicht;
wenn die Zufallsbestimmung angibt, dass die Benutzerdatenanfrage übersprungen werden soll, Überspringen der Benutzerdatenanfrage;
wenn die Zufallsbestimmung angibt, dass die Benutzerdatenanfrage nicht übersprungen werden soll:
Vorbereitung einer ersten Kandidatenantwort auf die Benutzerdatenanfrage, wobei die erste Kandidatenantwort mindestens teilweise auf Daten basiert, die mit einem ersten Nutzer assoziiert sind;
Empfang mehrerer weiterer Kandidatenantworten, die jeweils auf Daten basieren, die jeweils mit mehreren weiteren Benutzern assoziiert sind;
Bestimmung der Privatsphärenstufe einer ersten Kandidatenantwort basierend mindestens teilweise auf den empfangenen mehreren weiteren Kandidatenantworten; und
Bestimmung, dass die Privatsphärenstufe eine Privatsphärengrenze übersteigt, und in Reaktion darauf Senden einer Benutzerdatenantwort, die mit der Benutzerdatenanfrage assoziiert ist, an die anfragende Partei.

## Revendications

1. Procédé mis en oeuvre par ordinateur, comprenant :
l'obtention d'une requête de données d'utilisateur qui est associée à une partie requérante ;
l'amélioration de la confidentialité et de l'anonymat de l'utilisateur en déterminant aléatoirement s'il faut sauter ou non la requête de données d'utilisateur ;
si la détermination aléatoire est qu'il faut sauter la requête de données d'utilisateur, faire en sorte de sauter la requête de données d'utilisateur ;
si la détermination aléatoire est qu'il ne faut pas sauter la requête de données d'utilisateur, alors :
la préparation d'une première réponse candidate à la requête de données d'utilisateur, la première réponse candidate étant basée au moins en partie sur les données qui sont associées à un premier utilisateur ;
la réception d'une pluralité de réponses candidates supplémentaires qui sont respectivement basées sur les données qui sont respectivement associées à une pluralité d'utilisateurs supplémentaires ;
la détermination d'un niveau de confidentialité de la première réponse candidate en se basant au moins en partie sur la pluralité reçue de réponses candidates supplémentaires ; et
la détermination que le niveau de confidentialité excède un seuil de confidentialité et l'envoi en réponse à la partie requérante d'une réponse de données d'utilisateur associée à la requête de données d'utilisateur.

2. Procédé selon la revendication 1, dans lequel la requête de données d'utilisateur inclut des instructions exécutables par ordinateur.

3. Procédé selon la revendication 1, réalisé dans un environnement d'exécution de confiance (TEE).

4. Procédé selon la revendication 3, dans lequel le TEE est associé à un seuil utilisateur et n'est pas associé à l'un quelconque des utilisateurs supplémentaires de la pluralité d'utilisateurs supplémentaires.

5. Procédé selon la revendication 1, réalisé dans un dispositif de courtage de données.

6. Procédé selon la revendication 1, réalisé dans un dispositif d'agrégation de données.

7. Procédé selon la revendication 1, dans lequel la réponse de données d'utilisateur est basée au moins en partie sur la première réponse candidate et au moins en partie sur la pluralité reçue de réponses candidates supplémentaires.

8. Procédé selon la revendication 1, dans lequel la réponse de données d'utilisateur est basée au moins en partie sur une combinaison statistique de la première réponse candidate et la pluralité reçue de réponses candidates supplémentaires.

9. Procédé selon la revendication 1, dans lequel la réponse de données d'utilisateur consiste en la première réponse candidate.

10. Procédé selon la revendication 1, dans lequel la détermination du niveau de confidentialité de la première réponse candidate basée au moins en partie sur la pluralité reçue de réponses candidates supplémentaires comprend la détermination du niveau de confidentialité de la première réponse candidate en se basant au moins en partie sur un nombre total de réponses candidates supplémentaires dans la pluralité de réponses candidates supplémentaires.

11. Procédé selon la revendication 1, comprenant en outre :
la détermination d'un nombre similaire de réponses candidates supplémentaires dans la pluralité de réponses candidates supplémentaires qui sont similaires à la première réponse candidate,
la détermination du niveau de confidentialité de la première réponse candidate en se basant au moins en partie sur la pluralité reçue de réponses candidates supplémentaires comprenant la détermination du niveau de confidentialité de la première réponse candidate en se basant au moins en partie sur le nombre similaire de réponses candidates supplémentaires.

12. Procédé selon la revendication 1, comprenant en outre :
la requête de réponses candidates supplémentaires en se basant sur la requête de données d'utilisateur ; et
la réception des réponses candidates supplémentaires dans la pluralité de réponses candidates supplémentaires en provenance d'environnements d'exécution de confiance respectifs (TEE).

13. Procédé selon la revendication 12, dans lequel la requête des réponses candidates supplémentaires comprend l'envoi de requêtes de réponses candidates supplémentaires respectives aux TEE respectifs.

14. Procédé selon la revendication 13, dans lequel chaque requête de réponse candidate supplémentaire comprend la requête de données d'utilisateur.

15. Système informatique comprenant :
une interface de communication ;
un processeur ; et
une mémoire de données contenant des instructions exécutables par le processeur pour amener le système informatique à exécuter un ensemble de fonctions, cet ensemble de fonctions incluant :
l'obtention d'une requête de données d'utilisateur qui est associée à une partie requérante ;
l'amélioration de la confidentialité et de l'anonymat de l'utilisateur en déterminant aléatoirement s'il faut sauter la requête de données d'utilisateur ;
si la détermination aléatoire est qu'il faut sauter la requête de données d'utilisateur, faire en sorte de sauter la requête de données d'utilisateur ;
si la détermination aléatoire est qu'il ne faut pas sauter la requête de données d'utilisateur, alors :
la préparation d'une première réponse candidate à la requête de données d'utilisateur, la première réponse candidate étant basée au moins en partie sur les données qui sont associées à un premier utilisateur ;
la réception d'une pluralité de réponses candidates supplémentaires qui sont respectivement basées sur les données qui sont respectivement associées à une pluralité d'utilisateurs supplémentaires ;
la détermination d'un niveau de confidentialité de la première réponse candidate en se basant au moins en partie sur la pluralité reçue de réponses candidates supplémentaire ; et
la détermination que le niveau de confidentialité excède un seuil de confidentialité et l'envoi en réponse à la partie requérante d'une réponse de données d'utilisateur associée à la requête de données d'utilisateur.
